# EUROPEAN PATENT APPLICATION

(11) **EP 3 170 876 A1**
(43) Date of publication of application: **24.05.2017**
(21) Application number: 15194889.0
(22) Date of filing: 17.11.2015
(51) Int. Cl.: C09J 133/08, C08K 3/22

(54) **POST-CURABLE PRECURSOR OF AN ACRYLIC-BASED PRESSURE-SENSITIVE ADHESIVE**

(71) Applicant: 3M Innovative Properties Company, St. Paul, MN 55133-3427 (US)
(72) Inventor: Heimink, Jan, 41453 Neuss (DE); Richter, Mareike, 41453 Neuss (DE)
(74) Representative: Gabriel, Kiroubagaranne

(57) **Abstract**

The present disclosure is directed to a curable precursor of a pressure sensitive adhesive comprising:
a) a (co)polymeric material comprising the reaction product of a (co)polymerizable material comprising a (meth)acrylate ester monomer; and optionally, a co-monomer having an ethylenically unsaturated group;
b) a polyfunctional aziridine curing agent;
c) a thermal acid generating agent; and
d) magnetic particles.

The present disclosure is also directed to a method of applying such pressure sensitive adhesives to a substrate and uses thereof.

## Description

### Technical Field

The present disclosure relates generally to the field of adhesives, more specifically to the field of pressure sensitive adhesive (PSA). The present disclosure also relates to a method of applying such pressure sensitive adhesives and uses thereof.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives.

Pressure-sensitive tapes are virtually ubiquitous in the home and workplace. In its simplest configuration, a pressure-sensitive tape comprises an adhesive and a backing, and the overall construction is tacky at the use temperature and adheres to a variety of substrates using only moderate pressure to form the bond. In this fashion, pressure-sensitive tapes constitute a complete, self-contained bonding system.

Pressure sensitive adhesives (PSAs) are well known to one of ordinary skill in the art, and according to the Pressure-Sensitive Tape Council, PSAs are known to possess properties including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). PSAs do not embrace compositions merely because they are sticky or adhere to a surface.

These requirements are assessed generally by means of tests which are designed to individually measure tack, adhesion (peel strength), and cohesion (shear holding power), as noted in A.V. Pocius in Adhesion and Adhesives Technology: An Introduction, 2^{nd} Ed., Hanser Gardner Publication, Cincinnati, OH, 2002. These measurements taken together constitute the balance of properties often used to characterize a PSA.

With broadened use of pressure-sensitive tapes over the years, performance requirements have become more demanding. Shear holding capability, for example, which originally was intended for applications supporting modest loads at room temperature, has now increased substantially for many applications in terms of operating temperature and load. When used as attachment devices for a variety of assembly and manufacturing applications, such as interior or exterior automotive mounting of panels and molding, or in the construction industry, pressure sensitive adhesives are additionally required to provide good adhesion performance to rough or irregular surfaces. In addition, many applications require pressure sensitive adhesives to support a load at elevated temperatures, typically in the range of from 70°C to 90°C, for which high cohesive strengths are required. So-called high performance pressure-sensitive tapes are those capable of supporting loads at elevated temperatures for 10,000 minutes. Increased shear holding capability has generally been accomplished by crosslinking the PSA, although considerable care must be exercised so that high levels of tack and adhesion are retained in order to retain the aforementioned balance of properties.

In addition, when used as attachment devices for a variety of assembly and manufacturing applications, such as interior or exterior automotive mounting of panels and molding, or in the construction industry, pressure sensitive adhesives are additionally required to provide good adhesion performance to uneven or irregular surfaces. In that context, the application of PSA foam tapes to uneven or irregular surfaces is a recognized challenge, since the conformability of the adhesive tape is limited. In some specialized applications, such as taped seal on body and weather-strip tape applications for the automotive industry, successful tape application is rather challenging, especially in small radii in car bodies and critical topologies such as spot welds or other surface structures, since the adhered tape needs to combine two rather contradicting requirements. On the one hand, the tape has to resist high deformation forces, therefore high stress relaxation capabilities and good cohesive strength are required. On the other hand, the same unique tape needs to provide sufficient conformability to the uneven or irregular surface, and therefore excellent surface wetting capabilities are required for the tape.

In the same or some other specific applications, it is highly advantageous for pressure sensitive adhesives, in particular pressure sensitive adhesive foam tapes, to permit fast and on-demand application (e.g. at a specifically chosen time) to a specific surface.

It is therefore a recognized and continuous challenge in the adhesive tapes industry to provide pressure sensitive adhesives combining good adhesion, good cohesion properties. In order to optimize the adhesion of the PSA assembly to uneven or irregular substrates, an excellent surface wetting is additionally required.

Partial solutions have been described in the art, whereby a non- or very low crosslinked adhesive is applied to a surface and then post-cured, so that, after an adequate surface wetting, the cohesive strength can be built up. In that context, the so-called "semi-structural tapes" described e.g. in US 5,721,289 (Karim et al.) have been used, as. These systems are based on post-curable epoxy functionalities and specifically require using a superacid which is activated by UV irradiation as triggering energy. However, these known systems show undesired moisture sensitivity as the superacid needed for UV-induced cationic curing or crosslinking of the epoxy functionalities decomposes to hydronium ion, rendering ineffective the ring-opening polymerization of epoxies. Other known post-curable systems are based on the so-called "DICY-chemistry" described e.g. in EP-A1-0798354, wherein an epoxy-amine curing reaction is triggered with heat. However, these systems require a continuous heating step so as to maintain the curing reaction until the curing or crosslinking step has been completed. Patent applications US 2011/0076493-A1 (Kavanagh et al.) and US 2011/0178248-A1 (Kavanagh et al.) disclose pre-adhesive compositions comprising an aziridine crosslinking agent.

The commonly known curing or crosslinking systems do not often provide industrially viable solutions for the production of pressure sensitive adhesives having acceptable characteristics. Without contesting the technical advantages associated with the curing or crosslinking systems known in the art for producing pressure sensitive adhesives, there is still a need for a pressure sensitive adhesive provided with an excellent and versatile balance of adhesive and cohesive properties, whilst providing excellent surface wetting properties on substrates provided with uneven or irregular surfaces.

Other advantages of the pressure sensitive adhesives and methods of the invention will be apparent from the following description.

### Summary

According to one aspect, the present disclosure relates to a curable precursor of a pressure sensitive adhesive comprising:
a) a (co)polymeric material comprising the reaction product of a (co)polymerizable material comprising a (meth)acrylate ester monomer; and optionally, a co-monomer having an ethylenically unsaturated group;
b) a polyfunctional aziridine curing agent;
c) a thermal acid generating agent; and
d) magnetic particles.

In another aspect, the present disclosure relates to a composite assembly comprising a substrate and a curable precursor of a pressure sensitive adhesive as above described applied onto at least part of the surface of the substrate, thereby forming a layer of a curable precursor of a pressure sensitive adhesive.

According to still another aspect of the present disclosure, it is provided a method of applying a pressure sensitive adhesive to a substrate, comprising the steps of:
a) providing a curable precursor of a pressure sensitive adhesive comprising:
   i. a (co)polymeric material comprising the reaction product of a (co)polymerizable material comprising a (meth)acrylic acid ester monomer; and optionally, a co-monomer having an ethylenically unsaturated group;
   ii. a polyfunctional aziridine curing agent;
   iii. magnetic particles; and
   iv. a thermal acid generating agent;
b) applying the curable precursor of a pressure sensitive adhesive to at least part of the surface of the substrate; and
c) at least partially curing the curable precursor of a pressure sensitive adhesive by allowing acid to be released into it.

In still another aspect, the present disclosure relates to the use of a curable precursor of a pressure sensitive adhesive as above-described, for the bonding to an uneven or irregular substrate. In yet another aspect, the present disclosure relates to the use of a curable precursor of a pressure sensitive adhesive, for industrial applications, in particular for automotive applications, in particular for taped seal on body applications.

### Detailed description

According to a first aspect, the present disclosure relates to a curable precursor of a pressure sensitive adhesive comprising:
a) a (co)polymeric material comprising the reaction product of a (co)polymerizable material comprising a (meth)acrylate ester monomer; and optionally, a co-monomer having an ethylenically unsaturated group;
b) a polyfunctional aziridine curing agent;
c) a thermal acid generating agent; and
d) magnetic particles.

In the context of the present disclosure, it has surprisingly been found that a curable precursor of a pressure sensitive adhesive as described above is outstandingly suitable for quickly and efficiently producing post-cured pressure sensitive adhesives provided with an excellent and versatile balance of adhesive and cohesive properties, in particular on uneven or irregular substrates.

In the context of the present disclosure, the expressions "uneven surface" and "irregular surface" are used interchangeably, and are typically meant to refer to a surface which is discontinuous and/or non-flat and/or non-horizontal. Throughout the present disclosure, the expression "uneven surface" is preferably intended to refer to a surface typically provided with at least one structure selected from the group consisting of cavities, holes, apertures, orifices, pits, openings, gaps, troughs, edges, depressions, elevations, and any combinations thereof.

The curable precursor of a pressure sensitive adhesive according to the disclosure is particularly suitable to perform very fast and on-demand post-curing, i.e. activatable and delayed in-place curing. In the context of the present disclosure, the thermal acid generating agent for use herein acts as an activatable latent source of acid catalysts for cationic (ring-opening) polymerization of the polyfunctional aziridine curing agent, resulting in curing of the precursor of a pressure sensitive adhesive according to the disclosure.

Without wishing to be bound by theory, it is believed that the curing mechanism used to build up inner strength of the pressure sensitive adhesive involves the formation of an interpenetrating network involving the (meth)acrylate ester based (co)polymeric material and an aziridine network resulting from acid-catalyzed cationic ring-opening polymerization of polyfunctional aziridine monomeric units.

Still without wishing to be bound by theory, it is believed that the particular combination of a polyfunctional aziridine curing agent and a thermal acid generating agent, allows providing an excellent surface wetting characteristics to the precursor of a pressure sensitive adhesive on its uncured state, in particular on uneven or irregular substrates, which ultimately translates into providing excellent adhesives and cohesive properties to the pressure sensitive adhesive resulting from the curing of the precursor of the pressure sensitive adhesive.

Surprisingly still, it has been found that a curable precursor of a pressure sensitive adhesive as described above and comprising in particular magnetic particles, enables contact-free, very fast and strongly localized post-curing of the curable precursor of a pressure sensitive adhesive, which makes the curable precursor of a pressure sensitive adhesive of the present disclosure highly suitable for automated adhesive application processes.

In addition, the inclusion of magnetic particles in the curable precursor of a pressure sensitive adhesive of the present disclosure, enables homogeneous and intense post-curing from within the curable precursor of a pressure sensitive adhesive, translating into superior physical properties of the cured pressure sensitive adhesive (in particular viscosity properties) and enhanced application properties of the pressure sensitive adhesive, in particular on uneven or irregular substrates. As such, the curable precursor of a pressure sensitive adhesive comprising magnetic particles enables obtaining post-cured pressure sensitive adhesives which do not suffer from in-homogeneities or curing gradients which may typically occur with pressure sensitive adhesives thermally post-cured in conventional ovens.

The curable precursor of a pressure sensitive adhesive of the present disclosure may be (pre)polymerized and cured in-place to produce a pressure sensitive adhesive provided with excellent characteristics directly on the desired substrate or article.

The use of the curable precursor composition and method of the present disclosure affords a number of advantages as compared to conventional post-curable compositions, such as e.g. those based on post-curable epoxy functionalities or on the so-called "DICY-chemistry". These advantages include, but are not limited to, insensitivity of the curable composition to moisture, and ability to perform very fast post-curing of the curable precursor without the necessity to provide a continuous source of triggering energy for curing until the curing is completed.

In addition, the pressure-sensitive adhesives according to the present disclosure, i.e. in the cured state, provide the desired balance of tack, peel adhesion, and shear holding power, and further conform to the Dahlquist criteria; i.e. the modulus of the adhesive at the application temperature, typically room temperature, is less than 3 x 106 dynes/cm at a frequency of 1 Hz.

The pressure sensitive adhesives according to the disclosure may find particular use for industrial applications, in particular for construction applications, aerospace applications, and automotive applications, more in particular for taped seal on body, taped seal on door, exterior parts attachment and weather-strip tape applications for the automotive industry.

In the context of the present disclosure, the term "curing" is not meant to designate crosslinking, but is rather meant to refer to the formation of an interpenetrating polymer network structure, e.g. the interpenetrating network involving the (meth)acrylate ester based (co)polymeric network and the aziridine polymeric network resulting from acid-catalyzed cationic ring-opening polymerization of polyfunctional aziridine monomeric units.

In the context of the present disclosure, and as well known to those skilled in the art, the term "thermal acid generating agent" is meant to refer to a latent source of acid catalysts for performing e.g. cationic (ring-opening) polymerization, and which is activatable by exposure to a suitable triggering energy which is thermal energy.

As used herein, the term "alkyl (meth)acrylate" and "alkyl (meth)acrylate ester" are used interchangeably. The term "(meth)acrylate" refers to an acrylate, methacrylate, or both. The term "(meth)acrylic" refers to methacrylic, acrylic, or both. A (meth)acrylic-based" material refers to one prepared from one or more monomers having a (meth)acryloyl group, which is a group of formula CH₂=C(R)-(CO)- where R is hydrogen or methyl.

The term "alkyl" refers to a monovalent group which is a saturated hydrocarbon. The alkyl can be linear, branched, cyclic, or combinations thereof and typically has 1 to 32 carbon atoms. In some embodiments, the alkyl group contains 1 to 25, 1 to 20, 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, 2-ethylhexyl, 2-octyl and 2-propylheptyl, .

The terms "glass transition temperature" and "Tg" are used interchangeably and refer to the glass transition temperature of a material or a mixture. Unless otherwise indicated, glass transition temperature values are determined by Differential Scanning Calorimetry (DSC).

As used herein, the term "heteroalkyl" includes both straight-chained, branched, and cyclic alkyl groups with one or more heteroatoms independently selected from S, O, and N with both unsubstituted and substituted alkyl groups. Unless otherwise indicated, the heteroalkyl groups typically contain from 1 to 20 carbon atoms. "Heteroalkyl" is a subset of "hydrocarbyl containing one or more S, N, O, P, or Si atoms" described below. Examples of "heteroalkyl" as used herein include, but are not limited to, methoxy, ethoxy, propoxy, 3,6-dioxaheptyl, 3-(trimethylsilyl)-propyl, 4-dimethylaminobutyl, and the like. Unless otherwise noted, heteroalkyl groups may be mono- or polyvalent.

As used herein, "aryl" is an aromatic group containing 6-18 ring atoms and can contain optional fused rings, which may be saturated, unsaturated, or aromatic. Examples of an aryl groups include phenyl, naphthyl, biphenyl, phenanthryl, and anthracyl. Heteroaryl is aryl containing 1-3 heteroatoms such as nitrogen, oxygen, or sulfur and can contain fused rings. Some examples of heteroaryl groups are pyridyl, furanyl, pyrrolyl, thienyl, thiazolyl, oxazolyl, imidazolyl, indolyl, benzofuranyl, and benzthiazolyl. Unless otherwise noted, aryl and heteroaryl groups may be mono- or polyvalent.

As used herein, "(hetero)hydrocarbyl" is inclusive of hydrocarbyl alkyl and aryl groups, and heterohydrocarbyl heteroalkyl and heteroaryl groups, the later comprising one or more catenary oxygen heteroatoms such as ether or amino groups. Heterohydrocarbyl may optionally contain one or more catenary (in-chain) functional groups including ester, amide, urea, urethane, and carbonate functional groups. Unless otherwise indicated, the non-polymeric (hetero)hydrocarbyl groups typically contain from 1 to 60 carbon atoms. Some examples of such heterohydrocarbyls as used herein include, but are not limited to, methoxy, ethoxy, propoxy, 4-diphenylaminobutyl, 2-(2'-phenoxyethoxy)ethyl, 3,6-dioxaheptyl, 3,6-dioxahexyl-6-phenyl, in addition to those described for "alkyl", "heteroalkyl", "aryl", and "heteroaryl" *supra.*

In a typical aspect, the (co)polymeric material comprising the reaction product of a (co)polymerizable material comprising a (meth)acrylate ester monomer, comprises a polymer base material selected from the group consisting of polyacrylates whose main monomer component comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

According to a particular aspect, the (co)polymeric material for use herein comprises a polymer base material selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

According to a preferred aspect of the curable precursor of a pressure sensitive adhesive of the present disclosure, the (co)polymeric material for use herein comprises a polymer base material selected from the group consisting of polyacrylates whose main monomer component comprises a linear or branched alkyl (meth)acrylate ester selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, and any combinations or mixtures thereof.

In a more preferred aspect, the linear or branched alkyl (meth)acrylate ester for use herein is selected from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof; more preferably from the group consisting of iso-octyl acrylate (IOA), 2-ethylhexyl acrylate (2-EHA), 2-octyl acrylate (2-OA) and 2-propylheptyl acrylate (2-PHA). In a particularly preferred aspect, the linear or branched alkyl (meth)acrylate ester for use herein comprises or consists of 2-ethylhexyl acrylate.

According to an alternative aspect, the linear or branched alkyl (meth)acrylate ester for use herein is selected to comprise 2-octyl(meth)acrylate. Polymer base material derived from 2-octyl (meth)acrylate provides comparable adhesive properties when compared with other isomers of octyl (meth)acrylate, such as n-octyl and isooctyl. Further, the pressure sensitive adhesive compositions have lower inherent and solution viscosities when compared to adhesive compositions derived from other octyl isomers, such as isooctyl acrylate, at the same concentrations, and under the same polymerization conditions.

The 2-octyl (meth)acrylate may be prepared by conventional techniques from 2-octanol and (meth)acryloyl derivates such as esters, acids and acyl halides. The 2-octanol may be prepared by treatment of ricinoleic acid, derived from castor oil, (or ester or acyl halide thereof) with sodium hydroxide, followed by distillation from the co-product sebacic acid.

It is however preferred that the 2-octyl(meth)acrylate monomer for use herein is at least partly, preferably completely (i.e. 100 wt%) derived from biological material, more preferably from a plant material. This may advantageously be used to provide adhesive films/tapes which are at least partly derived from "green" sources, which is ecologically more sustainable and also reduces the dependency on mineral oil and the price development.

In the context of the present disclosure, the term "derived from biological material" is meant to express that from a certain chemical ingredient, at least a part of its chemical structure comes from biological materials, preferably at least 50 wt% of its structure. This definition is in principle the same as for bio-diesel fuel, in which usually only the fatty acid part originates from biological sources whereas the methanol may also be derived from fossil material like coal or mineral oil.

Accordingly, in one specific aspect, at least 50 wt%, at least 75 wt%, or even 100 wt% of the chemical structure of the 2-octyl(meth)acrylate is at least partly, preferably completely (i.e. 100 wt%) derived from biological material, more preferably from a plant material.

The (meth)acrylate ester monomer(s) for use herein may be present in the (co)polymerizable material, in any suitable amounts. In some exemplary aspects, the (meth)acrylate ester monomer(s) are present in amounts up to 100 parts by weight, up to 90 parts by weight, or even up to 80 parts by weight of the (co)polymerizable material. In some other exemplary aspects, this amount is typically of at least 50 parts by weight, or at least 60 parts by weight of the (co)polymerizable material.

Accordingly, in some exemplary aspects, the (meth)acrylate ester monomer(s) are present in amounts in a range of from 50 to 100 parts, from 60 to 95 parts by weight, from 65 to 90 parts, or even from 65 to 80 parts by weight of the (co)polymerizable material.

According to a particular aspect, the (co)polymeric material for use herein may further comprise an optional co-monomer having an ethylenically unsaturated group. Suitable co-monomer(s) having an ethylenically unsaturated group for use herein will be easily identified by those skilled in the art, in the light of the present description. As such, co-monomer(s) having an ethylenically unsaturated group for use herein are not particularly limited.

In one preferred aspect, the co-monomer(s) having an ethylenically unsaturated group include, but are not limited to, the group of polar monomers, in particular non-acid functional polar monomers.

In another aspect of the present disclosure, the co-monomer(s) having an ethylenically unsaturated group are selected from the group of non-acid functional polar monomers having a single ethylenically unsaturated group and a nitrogen-containing group or a salt thereof. In a typical aspect, the nitrogen-containing group is selected from secondary amido groups and tertiary amido groups, in particular those selected from the group consisting of N-vinyl lactams.

Advantageoulsy, the co-monomer(s) having an ethylenically unsaturated group may be selected from the group consisting of N-vinyl lactams, in particular N-vinyl caprolactam, N-vinyl piperidone, N-vinyl pyrrolidone; acryloyl morpholine, acrylamides and substituted acrylamides; in particular t-butyl acrylamide, dimethylamino ethyl acrylamide, N-octyl acrylamide, N,N-dialkyl acrylamides, N-methyl acrylamide, N-ethyl acrylamide, N-isopropyl acrylamide, tert-octyl acrylamide, N,N-dimethyl acrylamide, N,N-diethyl acrylamide, N,N-dipropyl acrylamide, N,N-dibutyl acrylamide; and any combinations or mixtures thereof. Preferably, the co-monomer(s) having an ethylenically unsaturated group comprise N-vinyl caprolactam. Preferably still, the co-monomer having an ethylenically unsaturated is selected to be N-vinyl caprolactam.

Without wishing to be bound by theory, it is believed that the co-monomer(s) having an ethylenically unsaturated group selected from the group of non-acid functional polar monomers having a single ethylenically unsaturated group and a nitrogen-containing group, and in particular those wherein the nitrogen-containing group is selected from the group consisting of N-vinyl lactams, do advantageously affect the curing mechanism. It is further believed that the co-monomer(s) having an ethylenically unsaturated group selected from the group of non-acid functional polar monomers having a single ethylenically unsaturated group and a nitrogen-containing group beneficially participate in the formation of an interpenetrating network involving the (meth)acrylate ester based (co)polymeric material and an aziridine network resulting from acid-catalyzed cationic ring-opening polymerization of polyfunctional aziridine monomeric units.

The co-monomer(s) having an ethylenically unsaturated group for use herein may be present in the (co)polymerizable material, in any suitable amounts. In some exemplary aspects, the co-monomer(s) having an ethylenically unsaturated group are present in amounts up to 40 parts by weight, up to 35 parts by weight, or even up to 30 parts by weight of the (co)polymerizable material. In some other exemplary aspects, this amount is typically of at least 5 parts by weight, or at least 10 parts by weight of the (co)polymerizable material.

Accordingly, in some exemplary aspects, the co-monomer(s) having an ethylenically unsaturated group are present in amounts in a range of from 0 to 40 parts, from 5 to 35 parts by weight, or even from 20 to 35 parts by weight of the (co)polymerizable material. In some other exemplary aspects, the co-monomer(s) having an ethylenically unsaturated group are present in amounts in a range of from 0 to 20 parts, from 5 to 15 parts by weight, or even from 5 to 10 parts by weight of the (co)polymerizable material.

In a particular aspect of the curable precursor of the present disclosure, the (co)polymerizable material comprises:
a) from 60 to 100 parts by weight, from 65 to 95 parts by weight, or even from 65 to 80 parts by weight, of a (meth)acrylate ester monomer; and
b) optionally, from 0 to 40 parts by weight, from 5 to 35 parts by weight, or even from 20 to 35 parts by weight, of a co-monomer having an ethylenically unsaturated group.

According to a particular aspect of the curable precursor according to the disclosure, the (co)polymerizable material is free of acid functional monomers.

In order to increase cohesive strength of the pressure sensitive adhesive, a multifunctional (meth)acrylate may optionally be incorporated into the blend of polymerizable monomers. Examples of useful multifunctional (meth)acrylate include, but are not limited to, di(meth)acrylates, tri(meth)acrylates, and tetra(meth)acrylates, such as 1,6-hexanediol di(meth)acrylate, poly(ethylene glycol) di(meth)acrylates, polybutadiene di(meth)acrylate, polyurethane di(meth)acrylates, and propoxylated glycerin tri(meth)acrylate, and mixtures thereof. The amount and identity of multifunctional (meth)acrylate is tailored depending upon application of the adhesive composition. Typically, the multifunctional (meth)acrylate is present in amounts less than 5 parts based on total dry weight of adhesive composition. More specifically, the crosslinker may be present in amounts from 0.01 to 5 parts, preferably 0.05 to 1 parts, based on 100 parts total monomers (polymerized or unpolymerized) of the adhesive composition.

Generally, the (co)polymerizable material (pre-polymerization monomer mixture) used to prepare the (co)polymeric material, includes an appropriate initiator. For polymerization by ultraviolet light, a photoinitiator is included. Useful photoinitiators include substituted acetophenones such as benzyl dimethyl ketal and 1-hydroxycyclohexyl phenyl ketone, substituted alpha-ketols such as 2-methyl-2-hydroxypropiophenone, benzoin ethers such as benzoin methyl ether, benzoin isopropyl ether, substituted benzoin ethers such as anisoin methyl ether, aromatic sulfonyl chlorides, photoactive oximes and azo-type initiators. The photoinitiator may be used in an amount from about 0.001 to about 5.0 parts by weight, preferably from about 0.01 to about 5.0 parts by weight, more preferably in an amount from 0.05 to 0.5 parts by weight, and more preferably in an amount from 0.05 to 0.3 parts by weight per 100 parts by weight of total monomer.

The pre-polymerization monomer mixture used to prepare the acrylate the (co)polymeric material, may also be polymerized by thermal polymerization or by a combination of thermal and radiation polymerization. For thermal polymerization, a thermal initiator is included. Thermal initiators useful in the present invention include, but are not limited to azo, peroxide, persulfate, and redox initiators. Azo-type initiators, such as e.g. the "Vazo" line, commercially available from DuPont Chemical Co, are particularly preferred. The thermal initiator may be used in an amount from about 0.01 to about 5.0 parts by weight per 100 parts by weight of total monomer, preferably from 0.025 to 2 weight percent.

The (co)polymerizable material may optionally further comprise chain transfer agents to control the molecular weight of the resultant polymer. Examples of useful chain transfer agents include but are not limited to those selected from the group consisting of carbon tetrabromide, alcohols, mercaptans, and mixtures thereof. When present, the preferred chain transfer agents are isooctylthioglycolate and carbon tetrabromide. The emulsion mixture may further comprise up to about 0.5 parts by weight of a chain transfer agent, typically about 0.01 to about 0.5 parts by weight, if used, preferably about 0.05 parts by weight to about 0.2 parts by weight, based upon 100 parts by weight of the total monomer mixture.

The curable precursor according to the disclosure further comprises a polyfunctional aziridine curing agent. Suitable polyfunctional aziridine curing agents for use herein will be easily identified by those skilled in the art, in the light of the present description. As such, the polyfunctional aziridine curing agents for use herein are not particularly limited. Suitable polyfunctional aziridine curing agents for use herein are described e.g. in US-A1-2011/0178248 (Kavanagh et al.), the content of which is herewith incorporated by reference.

In one exemplary aspect, the polyfunctional aziridine curing agents comprise at least two aziridine functional groups, in particular two or three aziridine functional groups. In another exemplary aspect, the polyfunctional aziridine curing agents comprise at least one aziridine functional group and at least one (meth)acryloyl functional group.

According to a particular aspect of the present disclosure, the polyfunctional aziridine curing agent for use herein has the following formula: 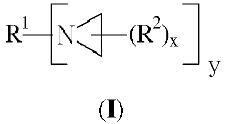 wherein
R¹ is a (hetero)hydrocarbyl group;
R² is an H or C₁-C₁₂ alkyl group, C₁-C₈ alkyl group, C₁-C₆ alkyl group, C₁-C₄ alkyl group, C₁-C₂ alkyl group, C₆-C₁₂ aromatic group, C₆-C₁₀ aromatic group, or even C₆-C₇ aromatic group; preferably R² is H, CH₂, C₂H₅ or even phenyl group;
x is 0, 1 or 2, and
y is at least 1, preferably 1 to 4, or even 2 to 3.

According to another particular aspect of the present disclosure, the polyfunctional aziridine curing agent for use herein has the following formula: 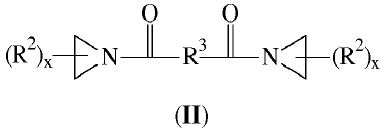 wherein
R³ is a (hetero)hydrocarbyl group;
R² is an H or C₁-C₁₂ alkyl group, C₁-C₈ alkyl group, C₁-C₆ alkyl group, C₁-C₄ alkyl group, C₁-C₂ alkyl group, C₆-C₁₂ aromatic group, C₆-C₁₀ aromatic group, or even C₆-C₇ aromatic group; preferably R² is H, CH₂, C₂H₅ or even phenyl group; and x is 0, 1 or 2.

According to another particular aspect of the present disclosure, the polyfunctional aziridine curing agent for use herein has the following formula: 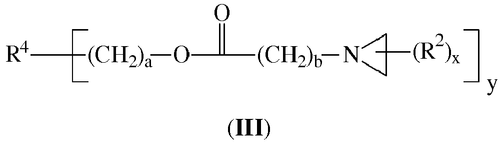 wherein
R⁴ is a (hetero)hydrocarbyl group having a valency of y;
R² is an H or C₁-C₁₂ alkyl group, C₁-C₈ alkyl group, C₁-C₆ alkyl group, C₁-C₄ alkyl group, C₁-C₂ alkyl group, C₆-C₁₂ aromatic group, C₆-C₁₀ aromatic group, or even C₆-C₇ aromatic group; preferably R² is H, CH₂, C₂H₅ or even phenyl group;
y is at least 1, preferably 1 to 4, or even 2 to 3;
x is 0, 1 or 2; and
each of a and b are independently 0 to 6 , 0 to 4, or even 0 to 2.

According to still another particular aspect of the present disclosure, the polyfunctional aziridine curing agent for use herein has the following formula: 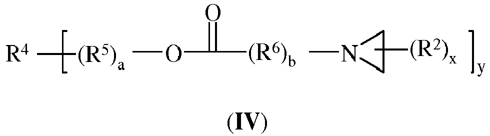 wherein
R⁴ is a (hetero)hydrocarbyl group having a valency of y;
R⁵ and R⁶ are independently (hetero)hydrocarbyl groups;
R² is an H or C₁-C₁₂ alkyl group, C₁-C₈ alkyl group, C₁-C₆ alkyl group, C₁-C₄ alkyl group, C₁-C₂ alkyl group, C₆-C₁₂ aromatic group, C₆-C₁₀ aromatic group, or even C₆-C₇ aromatic group; preferably R² is H, CH₂, C₂H₅ or even phenyl group;
y is at least 1, preferably 1 to 4, or even 2 to 3;
x is 0, 1 or 2; and
each of a and b are independently 0 to 6 , 0 to 4, or even 0 to 2.

According to still another particular aspect of the present disclosure, the polyfunctional aziridine curing agent for use herein has the following formula: 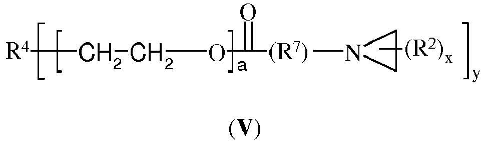 wherein
R⁴ is a (hetero)hydrocarbyl group having a valency of y;
R⁷ is a (hetero)hydrocarbyl group, in particular C₂-C₁₂ alkyl group, C₂-C₈ alkyl group, C₂-C₆ alkyl group, or even CH₂-CHR'-O-group, with R' being H or CH₃; R² is an H or C₁-C₁₂ alkyl group, C₁-C₈ alkyl group, C₁-C₆ alkyl group, C₁-C₄ alkyl group, C₁-C₂ alkyl group, C₆-C₁₂ aromatic group, C₆-C₁₀ aromatic group, or even C₆-C₇ aromatic group; preferably R² is H, CH₂, C₂H₅ or even phenyl group;
y is at least 1, preferably 1 to 4, or even 2 to 3;
x is 0, 1 or 2; and
a is 0 to 100, 1 to 50, 1 to 20 or even 1 to 10.

According to still another particular aspect of the present disclosure, the polyfunctional aziridine curing agent for use herein has the following formula: 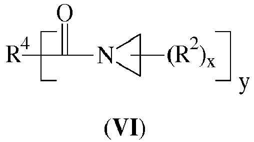 wherein
R⁴ is a hydrocarbyl group having a valency of y;
R² is an H or C₁-C₁₂ alkyl group, C₁-C₈ alkyl group, C₁-C₆ alkyl group, C₁-C₄ alkyl group, C₁-C₂ alkyl group, C₆-C₁₂ aromatic group, C₆-C₁₀ aromatic group, or even C₆-C₇ aromatic group; preferably R² is H, CH₂, C₂H₅ or even phenyl group;
y is at least 1, preferably 1 to 4, or even 2 to 3; and
x is 0, 1 or 2.

According to still another particular aspect of the present disclosure, the polyfunctional aziridine curing agents for use herein have the following formula: 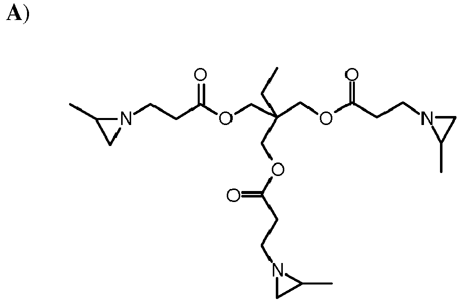 ; or 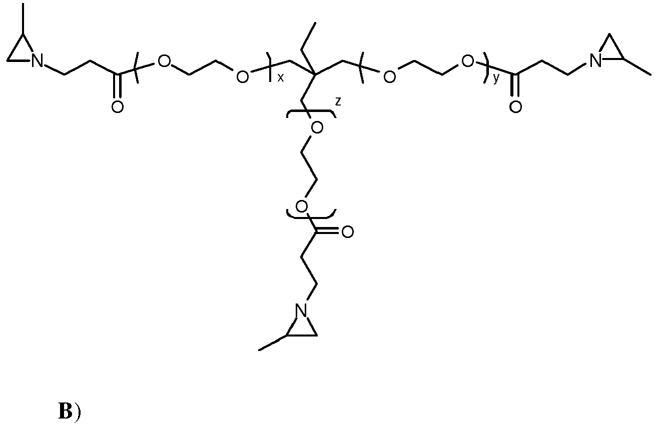 wherein x+y+z=14
; or 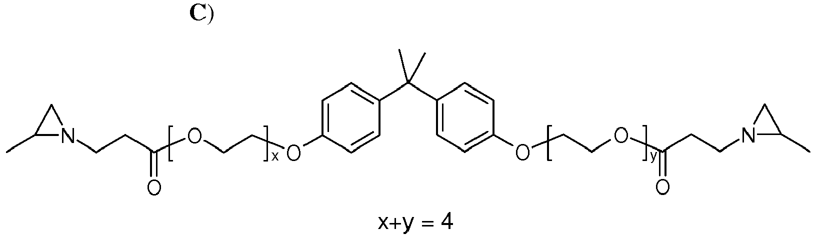 ; or

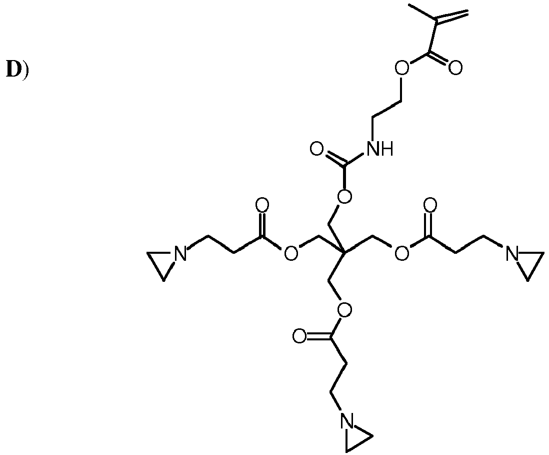

The curable precursor according to the disclosure further comprises a thermal acid generating agent. Suitable thermal acid generating agents for use herein will be easily identified by those skilled in the art, in the light of the present description. As such, the thermal acid generating agents for use herein are not particularly limited. Suitable thermal acid generating agents for use herein are described e.g. in US 5,089,536 (Palazzotto), the content of which is incorporated herein by reference. As will be apparent to those skilled in the art, some thermal acid generating agents may also at least partly operate as photo acid generating agents.

Without wishing to be bound by theory, it is believed that the (super)acid generated by the thermal acid generating agents initiates the ring-opening homopolymerization of the polyfunctional aziridine curing agents acting as monomeric units.

Suitable thermal acid generating agents are for example selected from the group consisting of quarternary blocked superacids, amine blocked superacids, and any combinations or mixtures thereof. Exemplary quarternary blocked superacids for use herein are quarternary blocked SbF₆, quarternary blocked triflic acid, and any combinations thereof. Exemplary suitable thermal acid generating agents are for example commercially available from King Industries under tradename K-Pure CXC and TAG series.

In a particular aspect, the thermal acid generating agents for use herein are selected from the group consisting of quarternary blocked SbF₆, quarternary blocked triflic acid, quarternary blocked fluorosulfonic acids, and any combinations or mixtures thereof.

The curable precursor according to the disclosure further comprises magnetic particles. Suitable magnetic particles for use herein will be easily identified by those skilled in the art, in the light of the present description. As such, the magnetic particles for use herein are not particularly limited.

According to an advantageous aspect, the magnetic particles for use herein are selected from the group consisting of paramagnetic particles, super-paramagnetic particles, ferrimagnetic particles, ferromagnetic particles, and any combinations or mixtures thereof. More advantageously, the magnetic particles for use herein are selected from the group consisting of ferrimagnetic particles, in particular ferrite or magnetite particles.

Magnetic particles for use herein may have any particular size. However, according to an advantageous aspect, the magnetic particles have an average primary particle size (d₅₀) below 150 µm, below 100 µm, below 80 µm, below 70 µm, below 60 µm, below 50 µm, below 40 µm, below 30 µm, below 20 µm, below 10 µm, below 5 µm, below 2 µm, below 1 µm or even below 0.5 µm.

The magnetic particles for use herein are typically sensitive to electromagnetic induction, i.e. the magnetic particles are capable of providing induction heating to the curable precursor when subjected to electromagnetic induction.

In a particular aspect, the curable precursor comprises magnetic particles in an amount comprised between 0.1 and 30 parts by weight, between 0.5 and 25 parts by weight, between 1 and 20 parts by weight, between 3 and 20 parts by weight, between 3 and 15 parts by weight, or even between 5 and 15 parts by weight.

The curable precursor according to the disclosure, may in some aspects further comprise a filler material which is preferably selected from the group consisting of filler particles, in particular expanded perlite, microspheres, expendable microspheres, glassbeads, glass microspheres, silica type fillers, hydrophobic silica type fillers, hydrophilic silica type fillers, hydrophobic fumed silica, hydrophilic fumed silica, fibers, electrically and/or thermally conducting particles, nanoparticles, in particular silica nanoparticles, and any combinations or mixtures thereof. The disclosure is however not that limited as alternative filler material may be easily identified by those skilled in the art, in the light of the present disclosure. In a particular aspect, the filler material, in particular the particulate filler material comprises hollow glass microspheres.

The filler material for use herein may be present in the curable precursor of a pressure sensitive adhesive, in any suitable amounts. In some exemplary aspects, the filler material is present in amounts up to 30 parts by weight, up to 25 parts by weight, or even up to 20 parts by weight of the curable precursor of a pressure sensitive adhesive. In some other exemplary aspects, this amount is typically of at least 1 part by weight, or at least 3 parts by weight of the curable precursor of a pressure sensitive adhesive.

Accordingly, in some exemplary aspects, the filler material is present in amounts in a range of from 1 to 20 parts, from 3 to 15 parts by weight, or even from 5 to 13 parts by weight of the curable precursor of a pressure sensitive adhesive.

According to an advantageous aspect, the curable precursor of the present disclosure is a curable precursor of a pressure sensitive adhesive foam (layer).

In the context of this disclosure, the (co)polymeric material comprising the reaction product of a (co)polymerizable material comprising a (meth)acrylate ester monomer is present in the curable precursor of a pressure sensitive adhesive in an amount of 100 parts by weight to calculate the amounts of the remaining ingredients.

In a particular aspect, the curable precursor of the disclosure comprises:
a) 100 parts by weight of a (co)polymeric material comprising the reaction product of a (co)polymerizable material comprising a (meth)acrylate ester monomer; and optionally, a co-monomer having an ethylenically unsaturated group;
b) from 0.1 to 30 parts by weight, from 0.5 to 25 parts by weight, from 1 to 20 parts by weight, from 3 to 20 parts by weight, from 5 to 20 parts by weight, or even from 5 to 15 parts by weight, of a polyfunctional aziridine curing agent;
c) from 0.01 to 10 parts by weight, from 0.1 to 8 parts by weight, from 0.2 to 6 parts by weight, from 0.2 to 5 parts by weight, from 0.2 to 4 parts by weight, or even from 0.2 to 2 parts by weight, of a thermal acid generating agent;
d) from 0.1 to 30 parts by weight, from 0.5 to 25 parts by weight, from 1 to 20 parts by weight, from 3 to 20 parts by weight, from 3 to 15 parts by weight, or even from 5 to 15 parts by weight, of magnetic particles; and
e) optionally, from 1 to 20 parts by weight, from 3 to 15 parts by weight, or even from 5 to 13 parts by weight, of a filler material, preferably hollow glass microspheres.

The curable precursor of a pressure sensitive adhesive may also contain one or more conventional additives. Preferred additives include tackifiers, plasticizers, dyes, antioxidants, and UV stabilizers. Such additives can be used if they do not affect the superior properties of the pressure sensitive adhesives.

If tackifiers are used, then up to about 50% by weight, preferably less than 30% by weight, and more preferably less than 5% by weight based on the dry weight of the total adhesive polymer would be suitable. The type and amount of tackifier can affect properties such as contactability, bonding range, bond strength, heat resistance and specific adhesion.

Suitable tackifying resins include, for example, terpene phenolics, rosins, rosin esters, esters of hydrogenated rosins, synthetic hydrocarbon resins and combinations thereof. Especially suitable tackifying resins include the commercially available tackifying resins: FORAL 85E (a glycerol ester of highly hydrogenated refined gum rosin) commercially available from Eastman, Middelburg, NL), FORAL 3085 (a glycerol ester of highly hydrogenated refined wood rosin) commercially available from Hercules Inc., Wilmington, DE; ESCOREZ 2520 and ESCOREZ 5615 (aliphatic/aromatic hydrocarbon resins) commercially available from ExxonMobil Corp., Houston, TX; and Regalite 7100 (a partially hydrogenated hydrocarbon resin) commercially available from Eastman, Kingsport, Tennessee.

The curable precursor of a pressure sensitive adhesive may contain a plasticizer, if desired. The plasticizer is typically selected to be compatible with (i.e., miscible with) the other components in the composition such as the polymerizable material and any optional tackifier. Suitable plasticizers include, but are not limited to, various polyalkylene oxides (e.g., polyethylene oxides or propylene oxides), adipic acid esters, formic acid esters, phosphoric acid esters, benzoic acid esters, phthalic acid esters, and sulfonamides, or naphthenic oils.

The (co)polymeric material may be prepared by any conventional free radical polymerization method, including solution, radiation, bulk, dispersion, emulsion, solventless, and suspension processes. Generally, the pre-polymerization monomer mixture used to prepare the (co)polymeric material, includes an appropriate initiator.

As will be apparent to those skilled in the art, the curable precursor of a pressure sensitive adhesive according to the present disclosure may further include a variety of additional additives depending on the envisaged properties for the resulting cured pressure sensitive adhesive. Exemplary additional additives include, but are not limited to, one or more plasticizers, UV stabilizers, antistatic agents, colorants, antioxidants, fungicides, bactericides, organic and/or inorganic filler particles, pigments, and any combinations thereof. Advantageously, the additional additives for use herein are non-polymerizable additives. As will be apparent to those skilled in the art, additional additives for use herein may be included at appropriate timing and in the appropriate polymeric or pre-polymeric matrix.

One exemplary method of preparing a curable precursor of a pressure sensitive adhesive comprises partially polymerizing monomers to produce a syrup polymer comprising the (meth)acrylate copolymer and unpolymerized monomers. Generally, the polyfunctional aziridine curing agent, the thermal acid generating agent, the magnetic particles, and optionally, the co-monomer having an ethylenically unsaturated group and the filler material are added to the partially polymerized composition, then coated on a suitable substrate and further polymerized. The syrup polymer composition is polymerized to a useful coating viscosity, which may be coated onto a substrate (such as a tape backing) and further polymerized. Partial polymerization provides a coatable solution of the (meth)acrylate copolymer.

In an alternative exemplary method of preparing a curable precursor of pressure sensitive adhesive, the (meth)acrylate copolymer is prepared by solution methods. A typical solution polymerization method is carried out by adding the monomers, a suitable solvent, and an optional chain transfer agent to a reaction vessel, adding a free radical initiator, purging with nitrogen, and maintaining the reaction vessel at an elevated temperature, typically in the range of about 40 to 100°C until the reaction is completed, typically in about 1 to 20 hours, depending upon the batch size and temperature. Examples of the solvent are methanol, tetrahydrofuran, ethanol, isopropanol, acetone, methyl ethyl ketone, methyl acetate, ethyl acetate, toluene, xylene, and an ethylene glycol alkyl ether. These solvents can be used alone or as mixtures thereof. Generally, the polyfunctional aziridine curing agent, the thermal acid generating agent, the magnetic particles, and optionally, the co-monomer having an ethylenically unsaturated group and the filler material are added to a solution of the (meth)acrylate copolymer thereby forming a coating solution, then coated on a suitable substrate and further dried in an oven.

The polymerizations may be conducted in the presence of, or preferably in the absence of, suitable solvents such as ethyl acetate, toluene and tetrahydrofuran which are unreactive with the functional groups of the components of the syrup polymer.

Polymerization can be accomplished by exposing the syrup polymer composition to energy in the presence of a photoinitiator. Energy activated initiators may be unnecessary where, for example, ionizing radiation is used to initiate polymerization.

A preferred method of preparation of the coatable syrup polymer is photoinitiated free radical polymerization. Advantages of the photopolymerization method are that 1) heating the monomer solution is unnecessary and 2) photoinitiation is stopped completely when the activating light source is turned off. Polymerization to achieve a coatable viscosity may be conducted such that the conversion of monomers to polymer is up to about 30%. Polymerization can be terminated when the desired conversion and viscosity have been achieved by removing the light source and by bubbling air (oxygen) into the solution to quench propagating free radicals. The solute polymer(s) may be prepared conventionally in a non-monomeric solvent and advanced to high conversion (degree of polymerization). When solvent (monomeric or non-monomeric) is used, the solvent may be removed (for example by vacuum distillation) either before or after formation of the syrup polymer. While an acceptable method, this procedure involving a highly converted functional polymer is not preferred because an additional solvent removal step is required, another material may be required (the non-monomeric solvent), and dissolution of the high molecular weight, highly converted solute polymer in the monomer mixture may require a significant period of time.

Useful photoinitiators include benzoin ethers such as benzoin methyl ether and benzoin isopropyl ether; substituted acetophenones such as 2, 2-dimethoxyacetophenone, available as Irgacure^{™} 651 photoinitiator (Ciba- Geigy Corp.; Ardsley, NY), 2,2 dimethoxy-2-phenyl-1-phenylethanone, available as Esacure^{™} KB-1 photoinitiator (Sartomer Co.; West Chester, PA), and dimethoxyhydroxyacetophenone; substituted α-ketols such as 2- methyl-2-hydroxy propiophenone; aromatic sulfonyl chlorides such as 2-naphthalene-sulfonyl chloride; and photoactive oximes such as 1-phenyl-1,2-propanedione-2-(O-ethoxy-carbonyl)oxime. Particularly preferred among these are the substituted acetophenones.

Preferred photoinitiators are photoactive compounds that undergo a Norrish I cleavage to generate free radicals that can initiate by addition to the acrylic double bonds. The photoinitiator can be added to the mixture to be coated after the copolymer has been formed, i.e., photoinitiator can be added to the syrup polymer mixture. Such polymerizable photoinitiators are described, for example, in U.S. Patent Nos. 5,902,836 and 5,506,279 (Babu et al.).

The syrup polymer composition and the photoinitiator may be irradiated with activating UV radiation to polymerize the monomer component(s). UV light sources can be of two types: 1) relatively low light intensity sources such as Blacklights which provide generally 10 mW/cm² or less (as measured in accordance with procedures approved by the United States National Institute of Standards and Technology as, for example, with a UVIMAP^{™} UM 365 L-S radiometer manufactured by Electronic Instrumentation & Technology, Inc., in Sterling, VA) over a wavelength range of 280 to 400 nanometers and 2) relatively high light intensity sources such as medium pressure mercury lamps which provide intensities generally greater than 10 mW/cm², preferably between 15 and 450 mW/cm². Where actinic radiation is used to fully or partially polymerize the syrup polymer composition, high intensities and short exposure times are preferred. For example, an intensity of 600 mW/cm² and an exposure time of about 1 second may be used successfully. Intensities can range from about 0.1 to about 150 mW/cm², preferably from about 0.5 to about 100 mW/cm², and more preferably from about 0.5 to about 50 mW/cm². Such photoinitiators preferably are present in an amount of from 0.1 to 1.0 pbw per 100 pbw of the syrup polymer composition.

Accordingly, relatively thick coatings (e.g., at least about 1 mil or 25.4 micrometers) can be achieved when the extinction coefficient of the photoinitiator is low.

The degree of conversion can be monitored during the irradiation by measuring the index of refraction of the polymerizing medium as previously described. Useful coating viscosities are achieved with conversions (i.e. the percentage of available monomer polymerized) in the range of up to 30%, preferably 2-20%, more preferably from 5-15%, and most preferably from 7-12%. The molecular weight (weight average) of the solute polymer(s) is at least 100,000, preferably at least 500,000.

When preparing pressure sensitive adhesives, it is expedient for the photoinitiated polymerization reactions to proceed to virtual completion, i.e., depletion of the monomeric components, at temperatures less than about 70°C (preferably at 50°C or less) with reaction times less than 24 hours, preferably less than 12 hours, and more preferably less than 6 hours. These temperature ranges and reaction rates obviate the need for free radical polymerization inhibitors, which are often added to acrylic systems to stabilize against undesired, premature polymerization and gelation. Furthermore, the addition of inhibitors adds extraneous material that will remain with the system and inhibit the desired polymerization of the syrup polymer and formation of the cured pressure sensitive adhesives of the disclosure. Free radical polymerization inhibitors are often required at processing temperatures of 70°C and higher for reaction periods of more than about 6 to 10 hours.

It is preferable to coat the curable precursor of pressure sensitive adhesive soon after preparation. The curable precursor composition of pressure sensitive adhesive, either as a syrup or solution are easily coated upon suitable substrates, such as flexible backing materials, by conventional coating techniques, then further polymerized, and cured or dried, to produce adhesive coated sheet materials. The flexible backing material may be any material conventionally utilized as a tape backing, optical film or any other flexible material.

Adhesive articles may be prepared by coating the curable precursor composition of a pressure sensitive adhesive on a suitable support, such as a flexible backing. Examples of materials that can be included in the flexible backing include polyolefins such as polyethylene, polypropylene (including isotactic polypropylene), polystyrene, polyester, polyvinyl alcohol, poly(ethylene terephthalate), poly(butylene terephthalate), poly(caprolactam), poly(vinylidene fluoride), polylactides, cellulose acetate, and ethyl cellulose and the like. Commercially available backing materials useful in the invention include kraft paper (available from Monadnock Paper, Inc.); cellophane (available from Flexel Corp.); spun-bond poly(ethylene) and poly(propylene), such as Tyvek™ and Typar™ (available from DuPont, Inc.); and porous films obtained from poly(ethylene) and poly(propylene), such as Teslin™ (available from PPG Industries, Inc.), and Cellguard™ (available from Hoechst-Celanese).

Backings may also be prepared of fabric such as woven fabric formed of threads of synthetic or natural materials such as cotton, nylon, rayon, glass, ceramic materials, and the like or nonwoven fabric such as air laid webs of natural or synthetic fibers or blends of these. The backing may also be formed of metal, metalized polymer films, or ceramic sheet materials may take the form of any article conventionally known to be utilized with pressure sensitive adhesive compositions such as labels, tapes, signs, covers, marking indicia, and the like.

The above-described precursor compositions are coated on a substrate using conventional coating techniques modified as appropriate to the particular substrate. For example, these compositions can be applied to a variety of solid substrates by methods such as roller coating, flow coating, dip coating, spin coating, spray coating, knife coating, and die coating. These various methods of coating allow the compositions to be placed on the substrate at variable thicknesses thus allowing a wider range of use of the compositions. Coating thicknesses may vary as previously described.

The syrup polymers may be of any desirable concentration for subsequent coating, but is typically between 2 to 20 wt.% polymer solids in monomer, preferably 5 to 15 wt.%. The desired concentration may be achieved by further dilution of the coating composition, or by partial drying.

The flexible support may also comprise a release-coated substrate. Such substrates are typically employed when an adhesive transfer tape is provided. Examples of release-coated substrates are well known in the art and include, by way of example, silicone-coated kraft paper and the like. Tapes of the invention may also incorporate a low adhesion backing (LAB), which are known in the art.

According to another aspect, the present disclosure relates to a cured pressure sensitive adhesive obtainable by curing the curable precursor as above-described. In this context, the curing step is preferably performed by allowing acid to be released into the curable precursor of a pressure sensitive adhesive.

In still another aspect, pressure sensitive adhesive as above described is only partially cured by allowing acid to be released into the curable precursor of a pressure sensitive adhesive.

According to an advantageous aspect, the partially cured pressure sensitive adhesive as above described has a complex viscosity comprised between 2,000 Pa.s and 80,000 Pa.s, between 2,000 Pa.s and 60,000 Pa.s, between 2,500 Pa.s and 50,000 Pa.s, between 3,000 Pa.s and 40,000 Pa.s, between 3,500 Pa.s and 35,000 Pa.s, between 4,000 Pa.s and 30,000 Pa.s, between 4,000 Pa.s and 20,000 Pa.s, between 4,000 Pa.s and 15,000 Pa.s, or even between 4,000 Pa.s and 10,000 Pa.s, when measured at 120°C according to the test method described in the experimental section.

In a typical aspect of the (partially) cured pressure sensitive adhesive according to the disclosure, the curing step is performed by subjecting the curable precursor of a pressure sensitive adhesive to a triggering energy sufficient to allow the thermal acid generating agent to release acid into the curable precursor of a pressure sensitive adhesive, and wherein the triggering energy is thermal energy.

According to a preferred aspect of the (partially) cured pressure sensitive adhesive according to the disclosure, the curing step is performed by subjecting the curable precursor of a pressure sensitive adhesive to a heating step performed by subjecting at least part of the magnetic particles to electromagnetic induction thereby induction heating the curable precursor of a pressure sensitive adhesive.

Methods of subjecting magnetic particles to electromagnetic induction thereby induction heating polymeric adhesive layers are known per se. A suitable induction heating method is described e.g. in US-A1-2003/0168640 (Kirsten). Advantageously, the magnetic particles for use herein are subjected to induction frequency above 100 kHz, above 200 kHz, above 400 kHz, above 600 kHz, or even above 800 kHz.

When using a heating step performed by subjecting the curable precursor of a pressure sensitive adhesive to induction heating, very fast heating rates may be achieved. This characteristic allows performing suitable heating step in very short timing and therefore allows embedding the heating step into automatic (dynamic) pressure sensitive tape application processes commonly used in industrial applications. The fast heating rates achievable when using induction heating methods may be particularly beneficial in pressure sensitive tape application processes commonly used in the automotive manufacturing industry, in particular for taped seal on body, exterior parts attachment and weather-strip tape applications.

Furthermore, using a heating step performed by subjecting the curable precursor of a pressure sensitive adhesive to induction heating, enables more homogeneous heat distribution and/or contact-free, strongly localized heating.

According to an advantageous aspect of the (partially) cured pressure sensitive adhesive according to the disclosure, the heating step is performed at a heating rate of at least 5 K/s, at least 10 K/s, at least 30 K/s, at least 40 K/s, at least 50 K/s, at least 60 K/s, at least 80 K/s, at least 100 K/s, at least 120 K/s, at least 140 K/s, at least 160 K/s, at least 180 K/s, at least 200 K/s, at least 220 K/s, at least 240 K/s, or even at least 250 K/s.

According to another beneficial aspect of the (partially) cured pressure sensitive adhesive according to the disclosure, the heating step is performed at a heating rate of less than 250 K/s, less than 220 K/s, less than 200 K/s, less than 180 K/s , less than 160 K/s, or even less than 140 K/s.

The use of a heating step performed by subjecting the curable precursor of a pressure sensitive adhesive to induction heating, also enables performing efficient curing of polymeric layers having a relatively high thickness, i.e. having a thickness of typically up to 4000 µm, or even up to 6000 µm, as well as polymeric layers comprising pigments, in particular dark/black pigments which are typically known to interfere with actinic radiation-based curing processes, such as e.g. UV-curing processes.

In still another aspect of the present disclosure, it is provided a composite assembly comprising a substrate and a curable precursor of a pressure sensitive adhesive, as above-described, applied onto at least part of the surface of the substrate, thereby forming a layer of a curable precursor of a pressure sensitive adhesive.

According to an advantageous execution of the composite assembly, the layer of a curable precursor of a pressure sensitive adhesive is at least partially cured, preferably by allowing acid to be released into the curable precursor of a pressure sensitive adhesive.

In a preferred aspect of the composite assembly according to the disclosure, the curing step is performed by subjecting the curable precursor of a pressure sensitive adhesive to a heating step performed by subjecting at least part of the magnetic particles to electromagnetic induction thereby induction heating the curable precursor of a pressure sensitive adhesive.

According to an advantageous aspect of the composite assembly, the layer of a curable precursor of a pressure sensitive adhesive takes the form of a precursor of a polymeric foam layer. According to this beneficial aspect, properties/requirements of the overall composite assembly such as application issues, deforming issues and energy distribution may be advantageously addressed by appropriate formulation of this polymeric foam layer, while other properties such as adhesion (quick adhesion) can be adjusted by the formulation of other non-foam pressure sensitive adhesive layers (also commonly referred to as skin layers).

In the context of the present disclosure, the term "polymeric foam" is meant to designate a material based on a polymer and which material comprises voids, typically in an amount of at least 5% by volume, typically from 10% to 55% by volume or from 10% to 45% by volume. The voids may be obtained by any of the known methods such as cells formed by gas. Alternatively, the voids may result from the incorporation of hollow fillers, such as hollow polymeric particles, hollow glass microspheres or hollow ceramic microspheres.

A polymeric foam layer for use herein has for example a thickness comprised between 100 and 6000 µm, between 200 and 4000 µm, between 500 and 2000 µm, or even between 800 and 1500 µm. As will be apparent to those skilled in the art, in the light of the present description, the preferred thickness of the polymeric foam layer will be dependent on the intended application.

A polymeric foam layer typically has a density comprised between 0.45 g/cm³ and 1.5 g/cm³, between 0.45 g/cm³ and 1.10 g/cm³, between 0.50 g/cm³ and 0.95 g/cm³, between 0.60 g/cm³ and 0.95 g/cm³, or even between 0.70 g/cm³ and 0.95 g/cm³. This density is achieved by including voids or cells. Typically, the polymeric foam layer will comprise at least 5% of voids by volume and for example between 15 and 45 %, or between 20% and 45% by volume.

The voids or cells in the polymeric foam layer can be created in any of the known manners described in the art and include the use of a gas or blowing agent and/or including hollow particles into the composition for the polymeric foam layer. For example, according to one method to create a polymeric foam described in US 4,415,615, an acrylic foam can be obtained by the steps of (i) frothing a composition containing the acrylate monomers and optional comonomers, (ii) coating the froth on a backing and (iii) polymerizing the frothed composition. It is also possible to coat the unfrothed composition of the acrylate monomers and optional comonomers to the backing and to then simultaneously foam and polymerize that composition. Frothing of the composition may be accomplished by whipping a gas into the polymerizable composition. Preferred gasses for this purpose are inert gasses such as nitrogen and carbon dioxide, particularly if the polymerization is photoinitiated.

According to an alternative execution, the composite assembly according to the present disclosure further comprises a secondary layer superimposed to at least one major surface of the polymeric foam layer. In a more preferred execution, the secondary layer preferably comprises a rubber-based elastomeric material and takes the form of a rubber seal.

According to still another aspect, it is provided a (post)curing system for pressure sensitive adhesives, comprising a polyfunctional aziridine curing agent, a thermal acid generating agent, and magnetic particles.

According to yet another aspect, the present disclosure is directed to a method of applying a pressure sensitive adhesive to a substrate, comprising the steps of:
a) providing a curable precursor of a pressure sensitive adhesive comprising:
   i. a (co)polymeric material comprising the reaction product of a (co)polymerizable material comprising a (meth)acrylic acid ester monomer; and optionally, a co-monomer having an ethylenically unsaturated group;
   ii. a polyfunctional aziridine curing agent;
   iii. magnetic particles; and
   iv. a thermal acid generating agent;
b) applying the curable precursor of a pressure sensitive adhesive to at least part of the surface of the substrate; and
c) at least partially curing the curable precursor of a pressure sensitive adhesive by allowing acid to be released into it.

According to another aspect, the present disclosure is directed to a method of applying a pressure sensitive adhesive to a substrate, comprising the steps of:
a) providing a curable precursor of a pressure sensitive adhesive comprising:
   i. a (co)polymeric material comprising the reaction product of a (co)polymerizable material comprising a (meth)acrylic acid ester monomer; and optionally, a co-monomer having an ethylenically unsaturated group;
   ii. a polyfunctional aziridine curing agent;
   iii. magnetic particles; and
   iv. a thermal acid generating agent;
b) partially curing the curable precursor of a pressure sensitive adhesive by allowing acid to be released into it;
c) applying the partially cured pressure sensitive adhesive to at least part of the surface of the substrate; and
d) allowing the partially cured pressure sensitive adhesive to fully cure onto the substrate.

In a particular aspect of the methods of applying a pressure sensitive adhesive to a substrate, as described above, the curing step is performed by subjecting the curable precursor of a pressure sensitive adhesive to a triggering energy sufficient to allow the acid generating agent to release acid into the curable precursor of a pressure sensitive adhesive, and wherein the triggering energy is thermal energy.

According to an advantageous aspect of these methods, the curing step is performed by subjecting the curable precursor of a pressure sensitive adhesive to a heating step performed by subjecting at least part of the magnetic particles to electromagnetic induction thereby induction heating the curable precursor of a pressure sensitive adhesive.

According to another advantageous aspect of these methods, the heating step is performed at a heating rate of at least 5 K/s, at least 10 K/s, at least 30 K/s, at least 40 K/s, at least 50 K/s, at least 60 K/s, at least 80 K/s, at least 100 K/s, at least 120 K/s, at least 140 K/s, at least 160 K/s, at least 180 K/s, at least 200 K/s, at least 220 K/s, at least 240 K/s, or even at least 250 K/s.

According to still another advantageous aspect, the heating step is performed at a heating rate of less than 250 K/s, less than 220 K/s, less than 200 K/s, less than 180 K/s, less than 160 K/s, or even less than 140 K/s.

In a particular aspect, the at least partially cured pressure sensitive adhesive has a complex viscosity comprised between 2,000 Pa.s and 80,000 Pa.s, between 2,000 Pa.s and 60,000 Pa.s, between 2,500 Pa.s and 50,000 Pa.s, between 3,000 Pa.s and 40,000 Pa.s, between 3,500 Pa.s and 35,000 Pa.s, between 4,000 Pa.s and 30,000 Pa.s, between 4,000 Pa.s and 20,000 Pa.s, between 4,000 Pa.s and 15,000 Pa.s, or even between 4,000 Pa.s and 10,000 Pa.s, when measured at 120°C according to the test method described in the experimental section.

In the context of the present disclosure, it has been found that a (at least) partially cured pressure sensitive adhesive having the above-detailed complex viscosity ranges, is outstandingly suitable for bonding to a substrate provided with an uneven surface, due in particular to its excellent surface wetting properties on substrates provided with uneven or irregular surfaces. These outstanding wetting characteristics provide the (at least) partially cured pressure sensitive adhesive with excellent conformability properties to surfaces having challenging topologies such as e.g. cavities or curved surfaces.

Accordingly, in a particular aspect of the methods of applying a pressure sensitive adhesive to a substrate, as described above, the substrate is provided with an uneven surface, and wherein the uneven surface is preferably provided with at least one structure selected from the group consisting of cavities, holes, apertures, orifices, pits, openings, gaps, troughs, edges, depressions, and any combinations thereof.

In an exemplary aspect, the structure is substantially circular and has preferably a depth above 50 µm, above 100 µm, above 150 µm, above 200 µm, above 300 µm, above 400 µm, above 500 µm, above 600 µm, above 700 µm, above 800 µm, or even above 900 µm.

In another particular aspect, the structure has a depth to diameter aspect ratio comprised between 0.03 and 0.20, between 0.04 and 0.17, between 0.04 and 0.14, between 0.05 and 0.13, or even between 0.07 and 0.11.

According to still another particular aspect, the structure provided in the uneven surface is selected from the group of spot welds, laser beam welds, rivets, punch rivets, clinch points, round joints, point joints, and any combinations thereof. More particularly, the structure is selected from the group of spot welds.

According to an alternative aspect of the present disclosure, the uneven surface for use herein is selected from the group of curved surfaces, bended surfaces, twisted surfaces, angled surfaces, arched surfaces, arced surfaces, and any combinations thereof. In a particular aspect, the uneven surface is selected from the group of radii parts in car body, in particular radii panels.

Other uneven surfaces for use herein may be easily identified by those skilled in the art, in the light of the present disclosure. Materials for forming substrates provided with uneven surfaces are not particularly limited. Exemplary main materials used for forming substrates provided with uneven surfaces are typically selected from the group consisting of metals, plastics, reinforced plastics, composite materials, glass materials, clear coats, wood, coatings, and any combinations thereof.

In the context of the present disclosure, uneven surfaces provided on living substrates such as e.g. parts of human or animal bodies are strictly excluded. Exemplary substrates provided with an uneven surface may typically be found in the automotive manufacturing industry, in the aerospace manufacturing industry, or in the construction industry.

In yet another aspect of the present disclosure, it is provided a method of preparing a cured pressure sensitive adhesive, comprising the steps of:
a) providing a curable precursor of a pressure sensitive adhesive comprising:
   i. a (co)polymeric material comprising the reaction product of a (co)polymerizable material comprising a (meth)acrylic acid ester monomer; and optionally, a co-monomer having an ethylenically unsaturated group;
   ii. a polyfunctional aziridine curing agent;
   iii. magnetic particles; and
   iv. a thermal acid generating agent; and
b) curing the curable precursor of a pressure sensitive adhesive by allowing acid to be released into it.

In a typical aspect of the method of preparing a cured pressure sensitive adhesive, as described above, the curing step is performed by subjecting the curable precursor of a pressure sensitive adhesive to a triggering energy sufficient to allow the thermal acid generating agent to release acid into the curable precursor of a pressure sensitive adhesive, and wherein the triggering energy is thermal energy.

According to an advantageous aspect of the method of preparing a cured pressure sensitive adhesive, the curing step is performed by subjecting the curable precursor of a pressure sensitive adhesive to a heating step performed by subjecting at least part of the magnetic particles to electromagnetic induction thereby induction heating the curable precursor of a pressure sensitive adhesive.

According to another advantageous aspect of this method, the heating step is performed at a heating rate of at least 5 K/s, at least 10 K/s, at least 30 K/s, at least 40 K/s, at least 50 K/s, at least 60 K/s, at least 80 K/s, at least 100 K/s, at least 120 K/s, at least 140 K/s, at least 160 K/s, at least 180 K/s, at least 200 K/s, at least 220 K/s, at least 240 K/s, or even at least 250 K/s.

According to still another advantageous aspect, the heating step is performed at a heating rate of less than 250 K/s, less than 220 K/s, less than 200 K/s, less than 180 K/s, less than 160 K/s, or even less than 140 K/s.

In the context of the present disclosure, the curable precursor of a pressure sensitive adhesives, the (co)polymeric material comprising the reaction product of a (co)polymerizable material comprising a (meth)acrylic acid ester monomer, the (meth)acrylic acid ester monomers, the optional co-monomers having an ethylenically unsaturated group, the polyfunctional aziridine curing agents, the thermal acid generating agents and the magnetic particles for use in the methods as described above are identical to those described above with respect to the curable precursor of a pressure sensitive adhesive according to another aspect of the present disclosure.

In still another aspect, the present invention relates to the use of a combination of a polyfunctional aziridine curing agent, a thermal acid generating agent, and magnetic particles for preparing a cured pressure sensitive adhesive comprising:
a) a (co)polymeric material comprising the reaction product of a (co)polymerizable material comprising a (meth)acrylate ester monomer; and
b) optionally, a co-monomer having an ethylenically unsaturated group.

In yet another aspect, the present invention relates to the use of a curable precursor of a pressure sensitive adhesive or a cured pressure sensitive adhesive as above described, for the bonding to an uneven or irregular surface, which is preferably a low surface energy substrate.

In another particular aspect, the present invention relates to the use of a curable precursor of a pressure sensitive adhesive or a cured pressure sensitive adhesive as above described, for the bonding to a low surface energy substrate.

In yet another aspect, the present invention relates to the use of a curable precursor of a pressure sensitive adhesive or a cured pressure sensitive adhesive as above described, for industrial applications, in particular for construction applications and automotive applications. According to a particular aspect, the curable precursor of a pressure sensitive adhesive or the cured pressure sensitive adhesive as above described is used for automotive applications, in particular for taped seal on body applications for the automotive industry.

The curable precursor of a pressure sensitive adhesive or a cured pressure sensitive adhesive of the present disclosure may be used in any article conventionally known to use such assemblies such as labels, tapes, signs, covers, marking indices, display components, touch panels, and the like. Flexible backing materials having microreplicated surfaces are also contemplated.

The pressure sensitive adhesive assembly according to the present disclosure may be particularly useful for forming strong adhesive bonds to low surface energy (LSE) substrates. Included among such materials are polypropylene, polyethylene (e.g., high density polyethylene or HDPE), blends of polypropylene (e.g. PP/EPDM, TPO). Other substrates may also have properties of low surface energy due to a residue, such as an oil residue or a film, such as paint, being on the surface of the substrate.

The substrate to which the curable precursor of a pressure sensitive adhesive or a cured pressure sensitive adhesive may be applied is selected depending on the particular application. For example, the curable precursor of a pressure sensitive adhesive or a cured pressure sensitive adhesive may be applied to sheeting products (e.g., decorative graphics and reflective products), label stock, and tape backings. Additionally, the curable precursor of a pressure sensitive adhesive or a cured pressure sensitive adhesive may be applied directly onto other substrates such as a metal panel (e.g., automotive panel) or a glass window so that yet another substrate or object can be attached to the panel or window. Accordingly, the curable precursor of a pressure sensitive adhesive or a cured pressure sensitive adhesive of the present disclosure may find a particular use in the automotive manufacturing industry (e.g. for attachment of exterior trim parts or for weatherstrips), in the construction industry or in the solar panel construction industry.
Item 1 is a curable precursor of a pressure sensitive adhesive comprising:
   a) a (co)polymeric material comprising the reaction product of a (co)polymerizable material comprising a (meth)acrylate ester monomer; and optionally, a co-monomer having an ethylenically unsaturated group;
   b) a polyfunctional aziridine curing agent;
   c) a thermal acid generating agent; and
   d) magnetic particles.
Item 2 is a curable precursor according to item 1, wherein the magnetic particles wherein the magnetic particles are selected from the group consisting of paramagnetic particles, super-paramagnetic particles, ferrimagnetic particles, ferromagnetic particles, and any combinations or mixtures thereof.
Item 3 is a curable precursor according to any of item 1 or 2, wherein the magnetic particles are selected from the group consisting of ferrimagnetic particles, in particular ferrite or magnetite particles.
Item 4 is a curable precursor according to any of the preceding items, wherein the magnetic particles are sensitive to electromagnetic induction.
Item 5 is a curable precursor according to any of the preceding items, wherein the magnetic particles provide induction heating to the curable precursor when subjected to electromagnetic induction.
Item 6 is a curable precursor according to any of the preceding items, wherein the curable precursor comprises magnetic particles in an amount comprised between 0.1 and 30 parts by weight, between 0.5 and 25 parts by weight, between 1 and 20 parts by weight, between 3 and 20 parts by weight, between 3 and 15 parts by weight, or even between 5 and 15 parts by weight.
Item 7 is a curable precursor according to any of the preceding claims, wherein the magnetic particles have an average primary particle size (d₅₀) below 150 µm, below 100 µm, below 80 µm, below 70 µm, below 60 µm, below 50 µm, below 40 µm, below 30 µm, below 20 µm, below 10 µm, below 5 µm, below 2 µm, below 1 µm or even below 0.5 µm.
Item 8 is a curable precursor according to any of the preceding items, wherein the polyfunctional aziridine curing agent comprises at least two aziridine functional groups, in particular two or three aziridine functional groups.
Item 9 is a curable precursor according to any of the preceding items, wherein the polyfunctional aziridine curing agent comprises at least one aziridine functional group and at least one (meth)acryloyl functional group.
Item 10 is a curable precursor according to any of the preceding items, wherein the polyfunctional aziridine curing agent has the following formula: 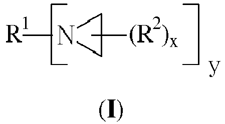 wherein
   R¹ is a (hetero)hydrocarbyl group,
   R² is an H or C₁-C₁₂ alkyl group, C₁-C₈ alkyl group, C₁-C₆ alkyl group, C₁-C₄ alkyl group, C₁-C₂ alkyl group, C₆-C₁₂ aromatic group, C₆-C₁₀ aromatic group, or even C₆-C₇ aromatic group; preferably R² is H, CH₂, C₂H₅ or even phenyl group;
   x is 0, 1 or 2, and
   y is at least 1, preferably 1 to 4, or even 2 to 3.
Item 11 is a curable precursor according to any of the preceding items, wherein the polyfunctional aziridine curing agent has the following formula: 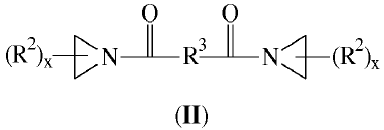 wherein
   R³ is a (hetero)hydrocarbyl group;
   R² is an H or C₁-C₁₂ alkyl group, C₁-C₈ alkyl group, C₁-C₆ alkyl group, C₁-C₄ alkyl group, C₁-C₂ alkyl group, C₆-C₁₂ aromatic group, C₆-C₁₀ aromatic group, or even C₆-C₇ aromatic group; preferably R² is H, CH₂, C₂H₅ or even phenyl group; and x is 0, 1 or 2.
Item 12 is a curable precursor according to any of the preceding items, wherein the polyfunctional aziridine curing agent has the following formula: 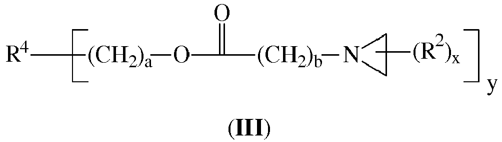 wherein
   R⁴ is a (hetero)hydrocarbyl group having a valency of y;
   R² is an H or C₁-C₁₂ alkyl group, C₁-C₈ alkyl group, C₁-C₆ alkyl group, C₁-C₄ alkyl group, C₁-C₂ alkyl group, C₆-C₁₂ aromatic group, C₆-C₁₀ aromatic group, or even C₆-C₇ aromatic group; preferably R² is H, CH₂, C₂H₅ or even phenyl group;
   y is at least 1, preferably 1 to 4, or even 2 to 3;
   x is 0, 1 or 2; and
   each of a and b are independently 0 to 6 , 0 to 4, or even 0 to 2.
Item 13 is a curable precursor according to any of the preceding items, wherein the polyfunctional aziridine curing agent has the following formula: 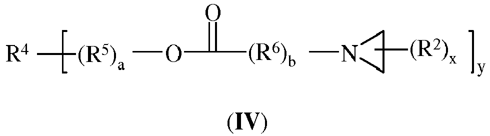 wherein
   R⁴ is a (hetero)hydrocarbyl group having a valency of y;
   R⁵ and R⁶ are independently (hetero)hydrocarbyl groups;
   R² is an H or C₁-C₁₂ alkyl group, C₁-C₈ alkyl group, C₁-C₆ alkyl group, C₁-C₄ alkyl group, C₁-C₂ alkyl group, C₆-C₁₂ aromatic group, C₆-C₁₀ aromatic group, or even C₆-C₇ aromatic group; preferably R² is H, CH₂, C₂H₅ or even phenyl group;
   y is at least 1, preferably 1 to 4, or even 2 to 3;
   x is 0, 1 or 2; and
   each of a and b are independently 0 to 6 , 0 to 4, or even 0 to 2.
Item 14 is a curable precursor according to any of the preceding items, wherein the polyfunctional aziridine curing agent has the following formula: 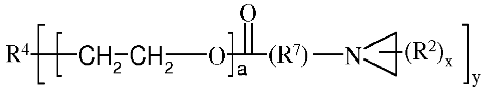 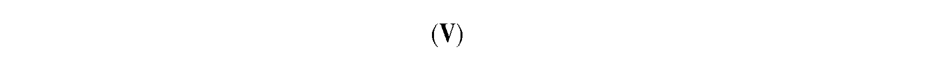 wherein
   R⁴ is a (hetero)hydrocarbyl group having a valency of y;
   R⁷ is a (hetero)hydrocarbyl group, in particular C₂-C₁₂ alkyl group, C₂-C₈ alkyl group, C₂-C₆ alkyl group, or even CH₂-CHR'-O-group, with R' being H or CH₃;
   R² is an H or C₁-C₁₂ alkyl group, C₁-C₈ alkyl group, C₁-C₆ alkyl group, C₁-C₄ alkyl group, C₁-C₂ alkyl group, C₆-C₁₂ aromatic group, C₆-C₁₀ aromatic group, or even C₆-C₇ aromatic group; preferably R² is H, CH₂, C₂H₅ or even phenyl group;
   y is at least 1, preferably 1 to 4, or even 2 to 3;
   x is 0, 1 or 2; and
   a is 0 to 100, 1 to 50, 1 to 20 or even 1 to 10.
Item 15 is a curable precursor according to any of the preceding items, wherein the polyfunctional aziridine curing agent has any the following formula: 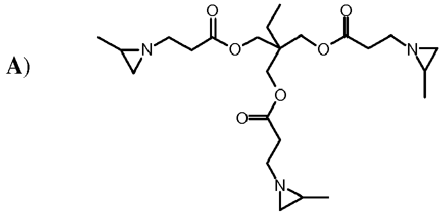 ; or 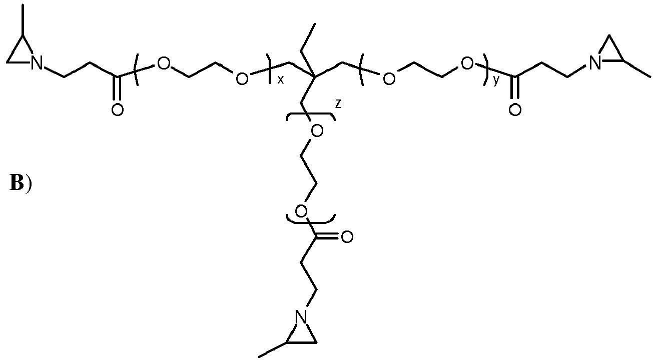 wherein x+y+z=14
   ; or 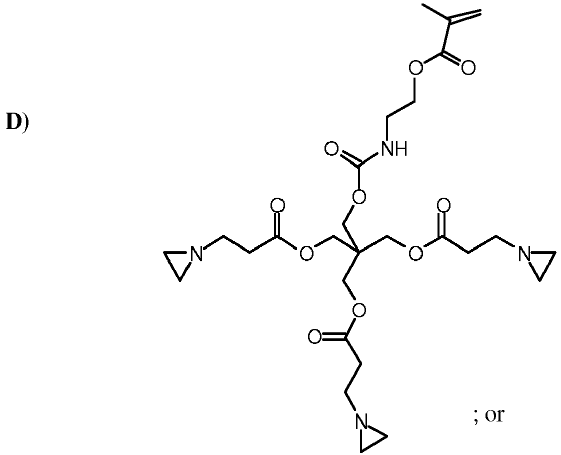 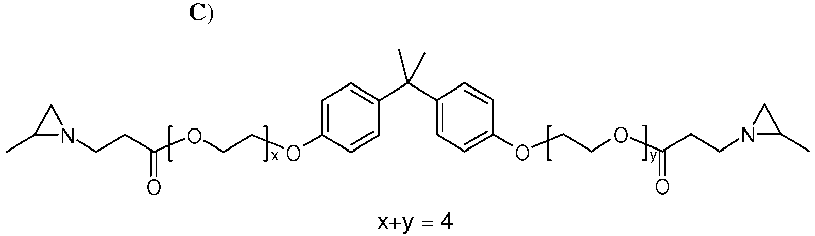
Item 16 is a curable precursor according to any of the preceding items, wherein the curable precursor comprises a polyfunctional aziridine curing agent in an amount comprised between 0.1 and 30 parts by weight, between 0.5 and 25 parts by weight, between 1 and 20 parts by weight, between 3 and 20 parts by weight, between 5 and 20 parts by weight, or even between 5 and 15 parts by weight.
Item 17 is a curable precursor according to any of the preceding items, wherein the thermal acid generating agent is selected from the group consisting of quarternary blocked superacids, amine blocked superacids, and any combinations or mixtures thereof.
Item 18 is a curable precursor according to any of the preceding items, wherein the acid generating agent is a thermal acid generating agent selected from the group consisting of quarternary blocked SbF₆, quarternary blocked triflic acid, quarternary blocked fluorosulfonic acids, and any combinations or mixtures thereof.
Item 19 is a curable precursor according to any of the preceding items, wherein the curable precursor comprises a thermal acid generating agent in an amount comprised between 0.01 and 10 parts by weight, between 0.1 and 8 parts by weight, between 0.2 and 6 parts by weight, between 0.2 and 5 parts by weight, between 0.2 and 4 parts by weight, or even between 0.2 and 2 parts by weight.
Item 20 is a curable precursor according to any of the preceding items, wherein the (co)polymerizable material comprises a (meth)acrylate ester monomer selected from the group of linear or branched alkyl (meth)acrylate esters, preferably a non-polar linear or branched alkyl (meth)acrylate esters having a linear or branched alkyl group comprising preferably from 1 to 32, from 1 to 20, or even from 1 to 15 carbon atoms.
Item 21 is curable precursor according to any of the preceding items, wherein the (meth)acrylate ester monomer is selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, and any combinations or mixtures thereof.
Item 22 is a curable precursor according to any of the preceding items, wherein the (meth)acrylate ester monomer is selected from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof; more preferably from the group consisting of iso-octyl acrylate, 2-ethylhexyl acrylate, 2-octyl acrylate, and 2-propylheptyl acrylate.
Item 23 is a curable precursor according to any of the preceding claims, wherein the (meth)acrylate ester monomer comprises 2-ethylhexyl acrylate.
Item 24 is curable precursor according to item 23, wherein at least 25 wt%, at least 50 wt%, at least 75 wt%, or even 100 wt% of the chemical structure of the 2-octyl(meth)acrylate is at least partly, preferably completely (i.e. 100 wt%) derived from biological material, more preferably from a plant material.
Item 25 is a curable precursor according to any of the preceding items, wherein the optional co-monomer having an ethylenically unsaturated group is selected from the group of non-acid functional polar monomers.
Item 26 is a curable precursor according to any of the preceding items, wherein the optional co-monomer having an ethylenically unsaturated group is selected from the group of non-acid functional polar monomers having a single ethylenically unsaturated group and a nitrogen-containing group or a salt thereof.
Item 27 is curable precursor according to item 26, wherein the nitrogen-containing group is selected from secondary amido groups and tertiary amido groups, in particular those selected from the group consisting of N-vinyl lactams.
Item 28 is curable precursor according to any of item 26 or 27, wherein the optional co-monomer having an ethylenically unsaturated group is selected from the group consisting of N-vinyl caprolactam; N-vinyl piperidone, N-vinyl pyrrolidone; acryloyl morpholine, acrylamides and substituted acrylamides; in particular t-butyl acrylamide, dimethylamino ethyl acrylamide, N-octyl acrylamide, N,N-dialkyl acrylamides, N-methyl acrylamide, N-ethyl acrylamide, N-isopropyl acrylamide, tert-octyl acrylamide, N,N-dimethyl acrylamide, N,N-diethyl acrylamide, N,N-dipropyl acrylamide, N,N-dibutyl acrylamide; and any combinations or mixtures thereof.
Item 29 is a curable precursor according to item 28, wherein the optional co-monomer having an ethylenically unsaturated group is selected to be N-vinyl caprolactam.
Item 30 is a curable precursor according to any of the preceding claims, wherein the (co)polymerizable material comprises:
   a) from 60 to 100 parts by weight, from 65 to 95 parts by weight, or even from 65 to 80 parts by weight, of a (meth)acrylate ester monomer; and
   b) optionally, from 0 to 40 parts by weight, from 5 to 35 parts by weight, or even from 20 to 35 parts by weight, of a co-monomer having an ethylenically unsaturated group.
Item 31 is a curable precursor according to any of the preceding items, wherein the (co)polymeric material comprising the reaction product of a (co)polymerizable material comprising a (meth)acrylate ester monomer, is free of acid functional monomers.
Item 32 is a curable precursor according to any of the preceding items, which further comprises a filler material which is preferably selected from the group consisting of filler particles, in particular expanded perlite, microspheres, expendable microspheres, glassbeads, glass microspheres, silica type fillers, hydrophobic silica type fillers, hydrophilic silica type fillers, hydrophobic fumed silica, hydrophilic fumed silica, fibers, electrically and/or thermally conducting particles, nanoparticles, in particular silica nanoparticles, and any combinations or mixtures thereof.
Item 33 is a curable precursor according to item 33, wherein the particulate filler material comprises hollow glass microspheres.
Item 34 is a curable precursor according to any of the preceding items, which is a curable precursor of a pressure sensitive adhesive foam (layer).
Item 35 is a curable precursor according to any of the preceding claims, which comprises:
   a) 100 parts by weight of a (co)polymeric material comprising the reaction product of a (co)polymerizable material comprising a (meth)acrylate ester monomer; and optionally, a co-monomer having an ethylenically unsaturated group;
   b) from 0.1 to 30 parts by weight, from 0.5 to 25 parts by weight, from 1 to 20 parts by weight, from 3 to 20 parts by weight, from 5 to 20 parts by weight, or even from 5 to 15 parts by weight, of a polyfunctional aziridine curing agent;
   c) from 0.01 to 10 parts by weight, from 0.1 to 8 parts by weight, from 0.2 to 6 parts by weight, from 0.2 to 5 parts by weight, from 0.2 to 4 parts by weight, or even from 0.2 to 2 parts by weight, of a thermal acid generating agent;
   d) from 0.1 to 30 parts by weight, from 0.5 to 25 parts by weight, from 1 to 20 parts by weight, from 3 to 20 parts by weight, from 3 to 15 parts by weight, or even from 5 to 15 parts by weight, of magnetic particles; and
   e) optionally, from 1 to 20 parts by weight, from 3 to 15 parts by weight, or even from 5 to 13 parts by weight, of a filler material, preferably hollow glass microspheres.
Item 36 is a cured pressure sensitive adhesive obtainable by curing the curable precursor according to any of the preceding items, wherein the curing step is preferably performed by allowing acid to be released into the curable precursor of a pressure sensitive adhesive.
Item 37 is pressure sensitive adhesive according to item 36, which is only partially cured by allowing acid to be released into the curable precursor of a pressure sensitive adhesive.
Item 38 is a partially cured pressure sensitive adhesive according to item 37, which has a complex viscosity comprised between 2,000 Pa.s and 80,000 Pa.s, between 2,000 Pa.s and 60,000 Pa.s, between 2,500 Pa.s and 50,000 Pa.s, between 3,000 Pa.s and 40,000 Pa.s, between 3,500 Pa.s and 35,000 Pa.s, between 4,000 Pa.s and 30,000 Pa.s, between 4,000 Pa.s and 20,000 Pa.s, between 4,000 Pa.s and 15,000 Pa.s, or even between 4,000 Pa.s and 10,000 Pa.s, when measured at 120°C according to the test method described in the experimental section.
Item 39 is a cured pressure sensitive adhesive according to any of items 36 to 38, wherein the curing step is performed by subjecting the curable precursor of a pressure sensitive adhesive to a triggering energy sufficient to allow the thermal acid generating agent to release acid into the curable precursor of a pressure sensitive adhesive, and wherein the triggering energy is thermal energy.
Item 40 is a cured pressure sensitive adhesive according to item 39, wherein the curing step is performed by subjecting the curable precursor of a pressure sensitive adhesive to a heating step performed by subjecting at least part of the magnetic particles to electromagnetic induction thereby induction heating the curable precursor of a pressure sensitive adhesive.
Item 41 is a cured pressure sensitive adhesive according to item 40, wherein the heating step is performed at a heating rate of at least 5 K/s, at least 10 K/s, at least 30 K/s, at least 40 K/s, at least 50 K/s, at least 60 K/s, at least 80 K/s, at least 100 K/s, at least 120 K/s, at least 140 K/s, at least 160 K/s, at least 180 K/s, at least 200 K/s, at least 220 K/s, at least 240 K/s, or even at least 250 K/s.
Item 42 is a cured pressure sensitive adhesive according to item 41, wherein the heating step is performed at a heating rate of less than 250 K/s, less than 220 K/s, less than 200 K/s, less than 180 K/s , less than 160 K/s, or even less than 140 K/s.
Item 43 is a composite assembly comprising a substrate and a curable precursor of a pressure sensitive adhesive according to any of items 1 to 35 applied onto at least part of the surface of the substrate, thereby forming a layer of a curable precursor of a pressure sensitive adhesive.
Item 44 is a composite assembly according to item 44, wherein the layer of a curable precursor of a pressure sensitive adhesive is at least partially cured, preferably by allowing acid to be released into the curable precursor of a pressure sensitive adhesive.
Item 45 is a composite assembly according to item 44, wherein the curing step is performed by subjecting the curable precursor of a pressure sensitive adhesive to a heating step performed by subjecting at least part of the magnetic particles to electromagnetic induction thereby induction heating the curable precursor of a pressure sensitive adhesive.
Item 46 is a composite assembly according to any of items 41 to 45, wherein the layer of a curable precursor of a pressure sensitive adhesive takes the form of a precursor of a polymeric foam layer.
Item 47 is a (post)curing system for pressure sensitive adhesives, comprising a polyfunctional aziridine curing agent, a thermal acid generating agent, and magnetic particles.
Item 48 is a method of applying a pressure sensitive adhesive to a substrate, comprising the steps of:
   a) providing a curable precursor of a pressure sensitive adhesive comprising:
      i. a (co)polymeric material comprising the reaction product of a (co)polymerizable material comprising a (meth)acrylic acid ester monomer; and optionally, a co-monomer having an ethylenically unsaturated group;
      ii. a polyfunctional aziridine curing agent;
      iii. magnetic particles; and
      iv. a thermal acid generating agent;
   b) applying the curable precursor of a pressure sensitive adhesive to at least part of the surface of the substrate; and
   c) at least partially curing the curable precursor of a pressure sensitive adhesive by allowing acid to be released into it.
Item 49 is a method of applying a pressure sensitive adhesive to a substrate, comprising the steps of:
   a) providing a curable precursor of a pressure sensitive adhesive comprising:
      i. a (co)polymeric material comprising the reaction product of a (co)polymerizable material comprising a (meth)acrylic acid ester monomer; and optionally, a co-monomer having an ethylenically unsaturated group;
      ii. a polyfunctional aziridine curing agent;
      iii. magnetic particles; and
      iv. a thermal acid generating agent;
   b) partially curing the curable precursor of a pressure sensitive adhesive by allowing acid to be released into it;
   c) applying the partially cured pressure sensitive adhesive to at least part of the surface of the substrate; and
   d) allowing the partially cured pressure sensitive adhesive to fully cure onto the substrate.
Item 50 is a method according to any of item 48 or 49, whereby the curing step is performed by subjecting the curable precursor of a pressure sensitive adhesive to a triggering energy sufficient to allow the thermal acid generating agent to release acid into the curable precursor of a pressure sensitive adhesive, and wherein the triggering energy is thermal energy.
Item 51 is method according to item 50, wherein the curing step is performed by subjecting the curable precursor of a pressure sensitive adhesive to a heating step performed by subjecting at least part of the magnetic particles to electromagnetic induction thereby induction heating the curable precursor of a pressure sensitive adhesive.
Item 52 is a method according to item 51, wherein the heating step is performed at a heating rate of at least 5 K/s, at least 10 K/s, at least 30 K/s, at least 40 K/s, at least 50 K/s, at least 60 K/s, at least 80 K/s, at least 100 K/s, at least 120 K/s, at least 140 K/s, at least 160 K/s, at least 180 K/s, at least 200 K/s, at least 220 K/s, at least 240 K/s, or even at least 250 K/s.
Item 53 is a method according to item 52, wherein the heating step is performed at a heating rate of less than 250 K/s, less than 220 K/s, less than 200 K/s, less than 180 K/s , less than 160 K/s, or even less than 140 K/s.
Item 54 is a method according to any of items 48 to 53, wherein the partially cured pressure sensitive adhesive has a complex viscosity comprised between 2,000 Pa.s and 80,000 Pa.s, between 2,000 Pa.s and 60,000 Pa.s, between 2,500 Pa.s and 50,000 Pa.s, between 3,000 Pa.s and 40,000 Pa.s, between 3,500 Pa.s and 35,000 Pa.s, between 4,000 Pa.s and 30,000 Pa.s, between 4,000 Pa.s and 20,000 Pa.s, between 4,000 Pa.s and 15,000 Pa.s, or even between 4,000 Pa.s and 10,000 Pa.s, when measured at 120°C according to the test method described in the experimental section.
Item 55 is a method according to any of items 48 to 54, wherein the substrate is provided with an uneven surface, and wherein the uneven surface is preferably provided with at least one structure selected from the group consisting of cavities, holes, apertures, orifices, pits, openings, gaps, troughs, edges, depressions, and any combinations thereof.
Item 56 is a method according to item 55, wherein the structure is substantially circular and has preferably a depth above 50 µm, above 100 µm, above 150 µm, above 200 µm, above 300 µm, above 400 µm, above 500 µm, above 600 µm, above 700 µm, above 800 µm, or even above 900 µm.
Item 57 is a method according to any of item 55 or 56, wherein the structure has a depth to diameter aspect ratio comprised between 0.03 and 0.20, between 0.04 and 0.17, between 0.04 and 0.14, between 0.05 and 0.13, or even between 0.07 and 0.11.
Item 58 is a method according to any of items 55 to 57, wherein the structure is selected from the group of spot welds, laser beam welds, rivets, punch rivets, clinch points, round joints, point joints, and any combinations thereof.
Item 59 is a method according to any of items 55 to 58, wherein the uneven surface is selected from the group of curved surfaces, bended surfaces, twisted surfaces, angled surfaces, arched surfaces, arced surfaces, and any combinations thereof.
Item 60 is a method according to item 59, wherein the uneven surface is selected from the group of radii parts in car body, in particular radii panels.
Item 61 is a method according to any of items 55 to 60, wherein the substrate comprises a main material selected from the group consisting of metals, plastics, reinforced plastics, composite materials, glass materials, clear coats, wood, coatings, and any combinations thereof.
Item 62 is a method of preparing a cured pressure sensitive adhesive, comprising the steps of:
   a) providing a curable precursor of a pressure sensitive adhesive comprising:
      i. a (co)polymeric material comprising the reaction product of a (co)polymerizable material comprising a (meth)acrylic acid ester monomer; and optionally, a co-monomer having an ethylenically unsaturated group;
      ii. a polyfunctional aziridine curing agent;
      iii. magnetic particles; and
      iv. a thermal acid generating agent; and
   b) curing the curable precursor of a pressure sensitive adhesive by allowing acid to be released into it.
Item 63 is a method according to item 62, whereby the curing step is performed by subjecting the curable precursor of a pressure sensitive adhesive to a triggering energy sufficient to allow the thermal acid generating agent to release acid into the curable precursor of a pressure sensitive adhesive, and wherein the triggering energy is thermal energy.
Item 64 is a method according to item 63, wherein the curing step is performed by subjecting the curable precursor of a pressure sensitive adhesive to a heating step performed by subjecting at least part of the magnetic particles to electromagnetic induction thereby induction heating the curable precursor of a pressure sensitive adhesive.
Item 65 is a method according to item 644, wherein the heating step is performed at a heating rate of at least 5 K/s, at least 10 K/s, at least 30 K/s, at least 40 K/s, at least 50 K/s, at least 60 K/s, at least 80 K/s, at least 100 K/s, at least 120 K/s, at least 140 K/s, at least 160 K/s, at least 180 K/s, at least 200 K/s, at least 220 K/s, at least 240 K/s, or even at least 250 K/s.
Item 66 is a method according to item 65, wherein the heating step is performed at a heating rate of less than 250 K/s, less than 220 K/s, less than 200 K/s, less than 180 K/s , less than 160 K/s, or even less than 140 K/s.
Item 67 is the use of a curable precursor of a pressure sensitive adhesive according to any of items 1 to 35 or the cured pressure sensitive adhesive according to any of items 36 to 42, for the bonding to an uneven or irregular surface, which is preferably a low surface energy substrate.
Item 68 is the use of a combination of a polyfunctional aziridine curing agent, a thermal acid generating agent, and magnetic particles for preparing a cured pressure sensitive adhesive comprising:
   a) a (co)polymeric material comprising the reaction product of a (co)polymerizable material comprising a (meth)acrylate ester monomer; and
   b) optionally, a co-monomer having an ethylenically unsaturated group.
Item 69 is the use of a curable precursor of a pressure sensitive adhesive according to any of items 1 to 35 or the cured pressure sensitive adhesive according to any of items 36 to 42, for industrial applications, in particular for construction applications and automotive applications, in particular for taped seal on body applications for the automotive industry.

### EXAMPLES

The invention is further illustrated by the following examples. These examples are merely for illustrative purposes only and are not meant to be limiting on the scope of the appended claims.

### Test Methods applied:

### Tensile testing in OLS (Overlap shear) geometry at 100m/min (in accordance with ASTM D897)

Overlap shear strength is determined according to ASTM D897 using a tensile tester of the type ZWICK/ROELL Z020 (available from Zwick GmbH & Co. KG, Ulm, Germany) at a crosshead speed of 100 mm/min.
For the test assembly preparation, two aluminium test panels (as later described), are joined in a overlap connection of 10 mm width and 100mm length using pressure sensitive adhesives of the current disclosure and by pressing these overlap shear test assemblies for 15 seconds with 300N (+/-5N). The test assemblies are then conditioned prior to testing for 24 hours at 23°C (+/- 2°C) and 50 % humidity (+/-5%).

### Complex viscosity @ 120°C:

All complex viscosity measurements are conducted with a standard rheometer, RDAII (Rheoservice, Germany) in plate-plate geometry, wherein the plate diameter is 8mm. Temperature control is achieved by using an oven at a heating rate of 20 K/min. Deformation of 1% is applied at an oscillation frequency of 1 Hz. Viscosity is monitored continuously during the measurement from room temperature up to 160°C. For further evaluation, viscosity values at 20°C and 120°C are determined and recorded.

### Test panels/substrates used for testing:

Aluminum test panels in accordance with ASTM B211 having a dimension of 50 mm x 25 mm x 1 mm. Prior to the preparation of an OLS test assembly, the aluminium panels are roughened using ScotchBrite 4774 (commercially available by 3M) and afterwards wiped once with isopropyl alcohol. Drying is done using a paper tissue. The cleaned aluminum test panel surface is then further pretreated with a commercially available 3M Primer P94.

### Raw materials:

In the examples, the following raw materials are used:
**2**-**Ethyl hexyl acrylate** (C8-acrylate, 2-EHA): is an ester of 2-ethylalcohol and acrylic acid which is obtained from BASF AG, Germany. Tg value: - 58 °C.
**N-Vinyl caprolactam (NVC):** monofunctional acrylic monomer with an amide-group in the side-chain, commercially available from BASF GmbH, Ludwigshafen, Germany.
**K-Pure CXC-1614:** Quarternary amine blocked triflic acid, thermal acid generator, commercially available by King Industries Inc., Norwalk, U.S.A.
**Aziridine curing agent CX-100:** Trimethylolpropane tris(2-methyl-1-aziridinepropionate), trifunctional aziridine curing agent, commercially available from DSM Neo Resins BV, Waalwijk, Netherlands.
**MagniF 25:** magnetite (Fe3O4), magnetic particles, obtained from LKAB Minerals, Germany
**Omnirad BDK:** 2,2-dimethoxy-2-phenylacetophenone is a UV-initiator, commercially available from iGm resins, Waalwijk Netherlands.
**3M Glass bubbles** (K15) are hollow glass bubbles with a diameter of 115 µm, available from 3M, Germany.
**Primer 94 (P94) :** adhesion promoter for pressure sensitive adhesives to surfaces such as polyethylene, polypropylene, ABS, PET/PBT blends, concrete, wood, glass, metal and painted metal surfaces, commercially available from 3M Deutschland GmbH, Germany.

### Preparation of the curable precursor:

The curable precursor of the pressure sensitive adhesive, is prepared by combining the C8 acrylate (2-EHA) and 0.04 pph of Omnirad BDK as a photoinitiator in a glass vessel. Before the UV exposure is initiated, the mixture is flushed 10 minutes with nitrogen and nitrogen is also bubbled into the mixture the whole time until the polymerization process is stopped by adding air to the syrup. All the time, the mixture is stirred with a propeller stirrer (300 U/min) and the reaction is stopped when a viscosity around 4500 mPas is reached (when measured with a Brookfield viscosimeter, T = 25 °C, spindle 4, 12 rpm). Additionally, the remaining amount of 0.16 pph Omnirad BDK, the selected aziridine curing agent, the selected magnetic particles, the selected glass bubbles and part of the NVC (10g of NVC are put aside) are added to the syrup and mixed until they have dissolved / dispersed. Finally, the thermal acid generating agent dissolved in the residual 10g NVC - is added under continuous stirring. The exact formulation of the curable precursor is later listed (in pph) in Table 2 below.

For coating the curable precursors, the line speed of the coater is set to 0.82 m/min. The resulting adhesive layer thickness is about 800 µm. Curing is accomplished in a UV-curing station with a length of 300 cm at the line speed given above. The total radiation intensity irradiated cumulatively from top and bottom and the respective length of the three coating zones within the UV-curing station are as follows:

**Table 1**

| | Zone 1 | Zone 2 | Zone 3 |
|---|---|---|---|
| Total intensity [mW/cm²] | 2.07 | 4.27 | 4.98 |

### Formulation of the curable precursor used for making the pressure sensitive adhesive

The formulation of the curable precursors used for making the pressure sensitive adhesive is listed in Table 2 below.

**Table 2**

| Curable precursor | Monomer | | Initiator | | | Aziridine | Magnetic particles | Filler |
|---|---|---|---|---|---|---|---|---|
| | 2-EHA | NVC | BDK I | BDK II | CXC-1614 | CX 100 | MagniF 25 | GB K15 |
| | w% | w% | pph | pph | pph | pph | pph | pph |
| CP1 | 75 | 25 | 0.04 | 0.16 | 0.6 | 10 | 12 | 9 |

### Test Results:

### OLS tensile results

The results of the OLS tensile testing for the pressure sensitive adhesive made from curable precursor CP1 are provided in Table 3. In this table are listed the resulting forces at 3mm for uncured pressure sensitive adhesives and pressure sensitive adhesives cured in a standard lab oven (110°C for 1200 seconds) or cured using induction heating (72 seconds at a temperature above 110°C). All induction heating experiments are carried out with a high frequency generator HFP 5, commercially available from EFD Induction GmbH in combination with a round 4 winded water-cooled copper coil. The induction heating experiments are conducted at a fixed frequency of 200 kHz and a power level of 4 kW. The mechanical tensile testing values in OLS geometry are directly correlated with the degree of post-curing achieved by the different thermal treatments. The force required for 3mm elongation in shear loading is a suitable metric to assess the efficiency of post-curing.

**Table 3**

| Curable precursor used | F(3mm)/N (**uncured**) | F (3mm) / N (**cured 1200 sec at 110°C**) | F (3mm) / N (i**nduction cured 72 sec at temperature above 110°C**) |
|---|---|---|---|
| CP1 | 79 | 118 | 128 |

The results of the OLS tensile testing clearly show the superior post-curing efficiency achieved by using induction heating when compared to using conventional oven thermal heating. In addition, a superior post-curing efficiency is achieved in only 72 seconds by using induction heating treatment, while about 1200 seconds are required for a conventional heating treatment to achieve a post-curing efficiency inferior by about 8%.

## Claims

1. A curable precursor of a pressure sensitive adhesive comprising:
a) (co)polymeric material comprising the reaction product of a (co)polymerizable material comprising a (meth)acrylate ester monomer; and optionally, a co-monomer having an ethylenically unsaturated group;
b) a polyfunctional aziridine curing agent;
c) a thermal acid generating agent; and
d) magnetic particles.

2. A curable precursor according to claim 1, wherein the magnetic particles wherein the magnetic particles are selected from the group consisting of paramagnetic particles, super-paramagnetic particles, ferrimagnetic particles, ferromagnetic particles, and any combinations or mixtures thereof.

3. A curable precursor according to any of claim 1 or 2, wherein the magnetic particles provide induction heating to the curable precursor when subjected to electromagnetic induction.

4. A curable precursor according to any of the preceding claims, wherein the polyfunctional aziridine curing agent comprises at least two aziridine functional groups, in particular two or three aziridine functional groups.

5. A curable precursor according to any of the preceding claims, wherein the thermal acid generating agent selected from the group consisting of quarternary blocked superacids, amine blocked superacids, and any combinations or mixtures thereof.

6. A curable precursor according to any of the preceding claims, wherein the (co)polymerizable material comprises a (meth)acrylate ester monomer selected from the group of linear or branched alkyl (meth)acrylate esters, preferably a nonpolar linear or branched alkyl (meth)acrylate esters having a linear or branched alkyl group comprising preferably from 1 to 32, from 1 to 20, or even from 1 to 15 carbon atoms.

7. A curable precursor according to any of the preceding claims, wherein the optional co-monomer having an ethylenically unsaturated group is selected from the group of non-acid functional polar monomers having a single ethylenically unsaturated group and a nitrogen-containing group or a salt thereof.

8. A curable precursor according to any of the preceding claims, which further comprises a filler material which is preferably selected from the group consisting of filler particles, in particular expanded perlite, microspheres, expendable microspheres, glassbeads, glass microspheres, silica type fillers, hydrophobic silica type fillers, hydrophilic silica type fillers, hydrophobic fumed silica, hydrophilic fumed silica, fibers, electrically and/or thermally conducting particles, nanoparticles, in particular silica nanoparticles, and any combinations or mixtures thereof.

9. A curable precursor according to any of the preceding claims, which comprises:
a) 100 parts by weight of a (co)polymeric material comprising the reaction product of a (co)polymerizable material comprising a (meth)acrylate ester monomer; and optionally, a co-monomer having an ethylenically unsaturated group;
b) from 0.1 to 30 parts by weight, from 0.5 to 25 parts by weight, from 1 to 20 parts by weight, from 3 to 20 parts by weight, from 5 to 20 parts by weight, or even from 5 to 15 parts by weight, of a polyfunctional aziridine curing agent;
c) from 0.01 to 10 parts by weight, from 0.1 to 8 parts by weight, from 0.2 to 6 parts by weight, from 0.2 to 5 parts by weight, from 0.2 to 4 parts by weight, or even from 0.2 to 2 parts by weight, of a thermal acid generating agent;
d) from 0.1 to 30 parts by weight, from 0.5 to 25 parts by weight, from 1 to 20 parts by weight, from 3 to 20 parts by weight, from 3 to 15 parts by weight, or even from 5 to 15 parts by weight, of magnetic particles; and
e) optionally, from 1 to 20 parts by weight, from 3 to 15 parts by weight, or even from 5 to 13 parts by weight, of a filler material, preferably hollow glass microspheres.

10. A cured pressure sensitive adhesive obtainable by curing the curable precursor according to any of the preceding claims, wherein the curing step is preferably performed by allowing acid to be released into the curable precursor of a pressure sensitive adhesive.

11. A method of applying a pressure sensitive adhesive to a substrate, comprising the steps of:
a) providing a curable precursor of a pressure sensitive adhesive comprising:
i. a (co)polymeric material comprising the reaction product of a (co)polymerizable material comprising a (meth)acrylic acid ester monomer; and optionally, a co-monomer having an ethylenically unsaturated group;
ii. a polyfunctional aziridine curing agent;
iii. magnetic particles; and
iv. a thermal acid generating agent;
b) applying the curable precursor of a pressure sensitive adhesive to at least part of the surface of the substrate; and
c) at least partially curing the curable precursor of a pressure sensitive adhesive by allowing acid to be released into it.

12. A method according to claim 11, whereby the curing step is performed by subjecting the curable precursor of a pressure sensitive adhesive to a triggering energy sufficient to allow the thermal acid generating agent to release acid into the curable precursor of a pressure sensitive adhesive, and wherein the triggering energy is thermal energy.

13. A method according to claim 12, wherein the curing step is performed by subjecting the curable precursor of a pressure sensitive adhesive to a heating step performed by subjecting at least part of the magnetic particles to electromagnetic induction thereby induction heating the curable precursor of a pressure sensitive adhesive, and wherein the heating step is preferably performed at a heating rate of at least 5 K/s, at least 10 K/s, at least 30 K/s, at least 40 K/s, at least 50 K/s, at least 60 K/s, at least 80 K/s, at least 100 K/s, at least 120 K/s, at least 140 K/s, at least 160 K/s, at least 180 K/s, at least 200 K/s, at least 220 K/s, at least 240 K/s, or even at least 250 K/s..

14. A method according to any of claims 11 to 13, wherein the substrate is provided with an uneven surface, and wherein the uneven surface is preferably provided with at least one structure selected from the group consisting of cavities, holes, apertures, orifices, pits, openings, gaps, troughs, edges, depressions, and any combinations thereof.

15. Use of a curable precursor of a pressure sensitive adhesive according to any of claims 1 to 9 or the cured pressure sensitive adhesive according to claim 10, for industrial applications, in particular for construction applications and automotive applications, in particular for taped seal on body applications for the automotive industry.
